(19) Europäisches Patentamt
European Patent Office
Office européen des brevets

(11) Veröffentlichungsnummer: **0 210 331**
**B1**

(12) # EUROPÄISCHE PATENTSCHRIFT

(45) Veröffentlichungstag der Patentschrift: **15.02.89**

(51) Int. Cl.⁴: **C09B 62/08**, C09B 62/507, D06P 1/38

(21) Anmeldenummer: **86104443.6**

(22) Anmeldetag: **01.04.86**

(54) **Wasserlösliche Mono- und Disazoverbindungen, Verfahren zu deren Herstellung und ihre Verwendung als Farbstoffe.**

(30) Priorität: **17.05.85 DE 3517755**

(43) Veröffentlichungstag der Anmeldung: **04.02.87 Patentblatt 87/6**

(45) Bekanntmachung des Hinweises auf die Patenterteilung: **15.02.89 Patentblatt 89/7**

(84) Benannte Vertragsstaaten: **CH DE FR GB IT LI**

(56) Entgegenhaltungen:
**EP-A- 0 094 020**
**DE-B- 1 179 317**
**GB-A- 1 013 442**

(73) Patentinhaber: **HOECHST AKTIENGESELLSCHAFT, Postfach 80 03 20, D-6230 Frankfurt am Main 80(DE)**

(72) Erfinder: **Segal, Marcos, Dr., Berliner Strasse 10, D-6238 Hofheim am Taunus(DE)**
Erfinder: **Kunze, Michael, Dr., Platanenweg 1a, D-6238 Hofheim am Taunus(DE)**

**EP 0 210 331 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung liegt auf dem technischen Gebiet der faserreaktiven Farbstoffe.

In der europäischen Patentanmeldungs-Veröffentlichung Nr. 0 094 020A werden faserreaktive Disazoverbindungen mit Farbstoffeigenschaften beschrieben, die aus der 1-Amino-8-naphthol-3,6- oder -4,6-disulfonsäure als bivalenter Kupplungskomponente, aus einer auf diese bivalente Kupplungskomponente neutral aufgekuppelte, gegebenenfalls substituierte Anilinverbindung als Diazokomponente, deren Substituenten jedoch keine faserreaktive Gruppe beinhalten, und aus einer sulfosubstituierten Phenylen-diamino-Verbindung als sauer angekuppelter, zweiter Diazokomponente, an deren freier Aminogruppe eine faserreaktive Gruppierung gebunden ist, aufgebaut sind. Die faserreaktive Gruppierung dieser bekannten Farbstoffe besteht aus einem 2-Phenylamino-4-halogeno-s-triazin-6-yl-Rest, deren Phenylamino-Substituent durch eine faserreaktive Gruppierung aus der Vinylsulfon-Reihe substituiert ist. Farbstoffe mit einem nitrosubstituierten Diphenylamin-amino-Substituenten an dem Halogentriazinyl-Rest sind von dieser europäischen Patentanmeldungs-Veröffentlichung nicht bekannt.

Mit der vorliegenden Erfindung wurden neue wertvolle wasserlösliche Azoverbindungen gefunden, die der allgemeinen Formel (1)

$$Z - D - N = N -( E - N = N )_k - K - R'' \qquad (1)$$

entsprechen. In dieser Formel bedeuten:
Z ist ein Rest der allgemeinen Formel (2)

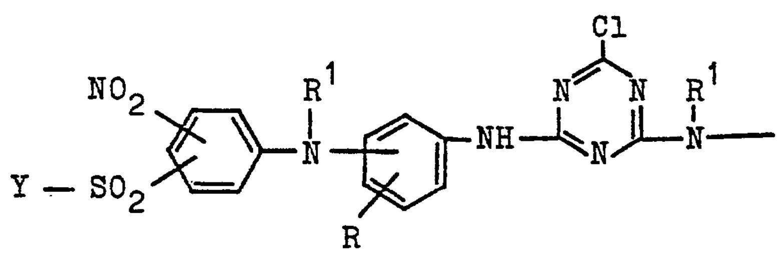

(2)

in welcher
$R^1$ für ein Wasserstoffatom oder eine gegebenenfalls substituierte Alkylgruppe von 1 bis 4 C-Atomen steht, wobei beide $R^1$ zueinander gleiche oder voneinander verschiedene Bedeutungen besitzen können,
R ein Wasserstoffatom oder eine Sulfogruppe bedeutet und
Y die Vinylgruppe oder eine β-Thiosulfatoethyl-, β-Phosphatoethyl-, β-Chlorethyl- oder bevorzugt eine β-Sulfatoethyl-Gruppe ist;
k ist die Zahl Null oder 1;
D ist eine Gruppe der allgemeinen Formel (3)

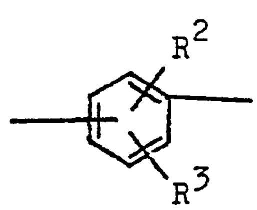

(3)

in welcher
$R^2$ ein Wasserstoffatom, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere die Methoxygruppe, ein Chloratom oder eine Sulfogruppe bedeutet und
$R^3$ ein Wasserstoffatom oder eine Sulfogruppe ist,
wobei $R^2$ und $R^3$ zueinander gleich oder voneinander verschieden sein können;
E ist der Rest einer kupplungsfähigen und diazotierbaren Verbindung, die beim Aufbau der Verbindungen (1) zunächst als Kupplungskomponente, dann als Diazokomponente dient, und
einen Phenylenrest, bevorzugt 1,4-Phenylenrest, darstellt, der durch einen oder zwei Substituenten substituiert sein kann, die aus der Menge von 2 Alkyl von 1 bis 4 C-Atomen, 2 Alkoxy von 1 bis 4 C-Atomen, 1 Chlor, 1 Brom, 1 Alkanoylamino von 2 bis 5 C-Atomen, das substituiert sein kann, wie hiervon bevorzugt Acetylamino, 1 Benzoylamino, 1 Sulfo, 1 Carboxy, 1 Ureido, 1 Phenylureido und 1 Alkylsulfonylamino von 1 bis 4 C-Atomen ausgewählt sind,

oder einen Naphthylenrest, wie beispielsweise den 1,4-Naphthylenrest, bedeutet, der durch 1 oder 2 Sulfogruppen oder die angegebene Gruppe $-SO_2-Y$ oder durch 1 Sulfogruppe und die angegebene Gruppe $-SO_2-Y$ substituiert sein kann, wobei Y die obengenannte Bedeutung hat und beide Y zueinander gleiche oder voneinander verschiedene Bedeutungen besitzen können,

R" ist ein Wasserstoffatom oder ein Chlortriazinylamino-Rest der obengenannten und definierten allgemeinen Formel (2), die beide zueinander gleiche oder voneinander verschiedene Bedeutungen besitzen können;

K ist im Falle, daß R" einen Rest der allgemeinen Formel (2) bedeutet, ein 1-Hydroxy-naphthylen-Rest, der in 2-Stellung die Azogruppe gebunden enthält, oder ist ein 2-Hydroxy-naphthylen-Rest, der in 1-Stellung die Azogruppe gebunden enthält, die beide bevorzugt durch 1 oder 2 Sulfogruppen substituiert sind, oder ist ein 1,4-Naphthylenrest, der durch 1 oder 2 Sulfogruppen substituiert sein kann, oder ist ein Phenylenrest, wie der 1,4-Phenylenrest, der durch 1 oder 2 Substituenten substituiert sein kann, die aus der Gruppe von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das substituiert sein kann, hiervon bevorzugt Acetylamino, 1 Benzoylamino, 1 Sulfo, 1 Carboxy, 1 Ureido, 1 Phenylureido und 1 Alkylsulfonylamino von 1 bis 4 C-Atomen ausgewählt sind, oder

K–R" mit R" einem Wasserstoffatom ist der 1-Hydroxy-naphthyl-Rest, der in 2-Stellung die Azogruppe gebunden enthält, oder der 2-Hydroxy-naphthyl-Rest, der in 1-Stellung die Azogruppe gebunden enthält, die durch 1 oder 2 Sulfogruppen substituiert sein können, bevorzugt substituiert sind, oder die durch eine gegebenenfalls substituierte Alkanoylaminogruppe von 2 bis 5 C-Atomen oder eine gegebenenfalls substituierte Benzoylaminogruppe oder bevorzugt durch eine oder zwei Sulfogruppen und eine gegebenenfalls substituierte Alkanoylaminogruppe von 2 bis 5 C-Atomen oder eine gegebenenfalls substituierte Benzoylaminogruppe substituiert sein können, oder

K–R" mit R" einem Wasserstoff ist ein Phenylrest, der, bevorzugt in p-Stellung, durch eine mono- oder disubstituierte Aminogruppe substituiert ist, deren Substituenten aus der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei dessen Phenylrest durch Methyl, Ethyl, Methoxy, Ethoxy, Chlor, Carboxy und/oder Sulfo substituiert sein kann, Phenyl und durch Alkyl von 1 bis 4 C-Atomen, Alkoxy von 1 bis 4 C-Atomen, Chlor, Carboxy und/oder Sulfo substituiertes Phenyl ausgewählt sind, wie Alkylamino von 1 bis 4 C-Atomen, wie Methylamino und Ethylamino, und N,N-Dialkylamino mit Alkylgruppen von jeweils 1 bis 4 C-Atomen, wie Dimethylamino und Diethylamino, und der zusätzlich durch 1 oder 2 Substituenten substituiert sein kann, die aus der Gruppe von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das substituiert sein kann, hiervon bevorzugt Acetylamino, 1 Benzoylamino, 1 Sulfo, 1 Carboxy, 1 Ureido, 1 Phenylureido und 1 Alkylsulfonylamino von 1 bis 4 C-Atomen ausgewählt sind.

Eine Sulfogruppe ist eine Gruppe entsprechend der allgemeinen Formel $-SO_3M$ , eine Carboxygruppe eine Gruppe entsprechend der allgemeinen Formel $-COOM$ , eine Thiosulfatogruppe eine Gruppe entsprechend der allgemeinen Formel $-S-SO_3M$ , eine Phosphatogruppe eine Gruppe entsprechend der allgemeinen Formel $-OPO_3M_2$ und eine Sulfatogruppe eine Gruppe entsprechend der allgemeinen Formel $-OSO_3M$, wobei M ein Wasserstoffatom oder Alkalimetall, wie Natrium, Kalium oder Lithium, oder das Äquivalent eines Erdalkalimetalls, wie des Calciums, bedeutet; bevorzugt ist M ein Wasserstoffatom und insbesondere ein Alkalimetall.

Die erfindungsgemäßen Azoverbindungen können in Form ihrer freien Säure und bevorzugt in Form ihrer Salze, insbesondere neutralen Salze, vorliegen; als Salze sind insbesondere die Alkalimetallsalze zu nennen. Die neuen Verbindungen finden bevorzugt in Form dieser Salze ihre Verwendung zum Färben und Bedrucken von hydroxy- und/oder carbonamidgruppenhaltigem Fasermaterial.

Bevorzugt enthält der Formelrest E keine Gruppe der allgemeinen Formel $-SO_2-Y$ .

Substituenten von substituierten Alkanoylaminogruppen von 2 bis 5 C-Atomen sind beispielsweise Chlor, Brom, Sulfo, Sulfato, Carboxy, Hydroxy, Carbomethoxy und Carbethoxy. Das Stickstoffatom der Alkanoylaminogruppe kann auch durch eine Alkylgruppe von 1 bis 4 C-Atomen, bevorzugt Methylgruppe, substituiert sein. Bevorzugt ist die Alkanoylaminogruppe eine Acetylamino- oder Propionylaminogruppe, die nicht substituiert ist.

Substituenten im Benzolkern von substituierten Benzoylaminogruppen sind beispielsweise Sulfo-, Carboxy- und Methylgruppen.

Alkylgruppen von 1 bis 4 C-Atomen, die substituiert sind, sind beispielsweise solche, die durch einen oder zwei, bevorzugt einen, Substituenten aus der Gruppe Acetylamino, Hydroxy, Sulfato, Alkoxy von 1 bis 4 C-Atomen, Sulfo und Carboxy substituiert sind.

Bevorzugt sind die Formelreste $R^1$ ein Wasserstoffatom oder eine Alkylgruppe von 1 bis 4 C-Atomen, wie insbesondere die Methyl- oder Ethylgruppe.

Bevorzugt ist Z ein Rest $Z^1$ der allgemeinen Formel (2a)

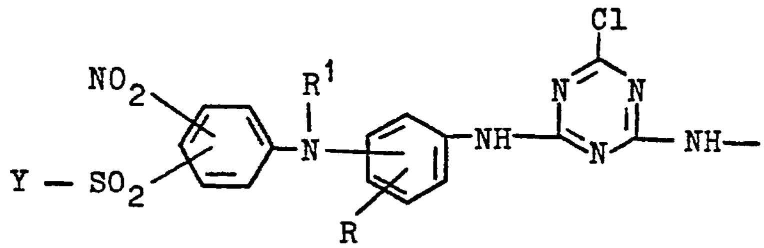

(2a)

in welcher R, R¹ und Y die obengenannten Bedeutungen haben und die Gruppe $-SO_2-Y$ und die Nitrogruppe zueinander meta-ständig an den Benzolkern gebunden sind, jedoch beide nicht gleichzeitig ortho-ständig zur Aminogruppe stehen, und insbesondere ein Rest $Z^2$ der allgemeinen Formel (2b)

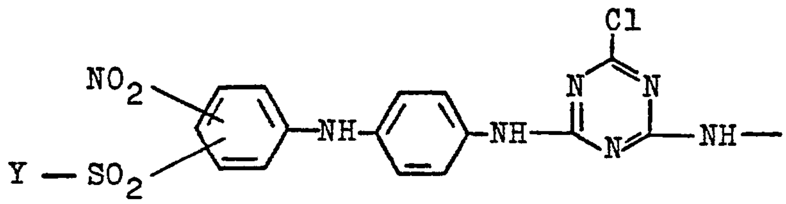

(2b)

in welcher Y die obengenannte Bedeutung besitzt und die Gruppe $-SO_2-Y$ und die Nitrogruppe zueinander meta-ständig an den Benzolkern gebunden sind, jedoch beide nicht gleichzeitig ortho-ständig zur Aminogruppe stehen.

Insbesondere bevorzugt ist der Formelrest Z–D– ein Rest der Formel (4a), (4b), (4c), (4d) oder (4e)

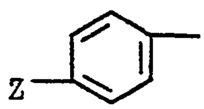

(4a)

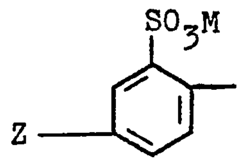

(4b)

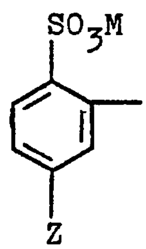

(4c)

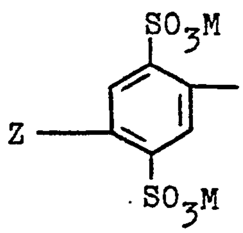

(4d)

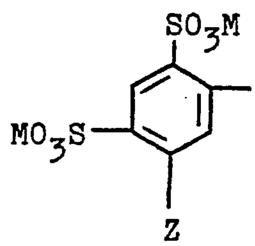

(4e)

in welchen M und Z die obengenannten Bedeutungen besitzen, Z jedoch bevorzugt der oben definierte Rest der allgemeinen Formel (2a) oder insbesondere der allgemeinen Formel (2b) ist.

Sofern k für die Zahl 1 steht, ist das Formelglied E bevorzugt der 1,4-Phenylenrest, der durch eine Alkanoylaminogruppe von 2 bis 5 C-Atomen, wie Acetylaminogruppe, eine Methyl-, Ethyl-, Carboxy-, Sulfo- oder Ureidogruppe oder ein Chloratom oder durch eine dieser Substituenten und durch eine Methyl-, Ethyl-, Methoxy-, Ethoxy- oder Sulfogruppe oder ein Chloratom substituiert sein kann, oder ein 1,4-Naphthylenrest, der durch eine oder zwei Sulfogruppen substituiert sein kann.

Die vorliegende Erfindung betrifft weiterhin Verfahren zur Herstellung der Azoverbindungen der allgemeinen Formel (1). Diese können erfindungsgemäß hergestellt werden, indem man eine Verbindung der allgemeinen Formel (5a) oder (5b)

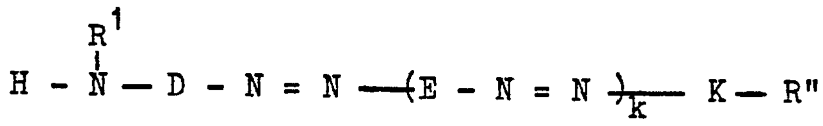
(5a)

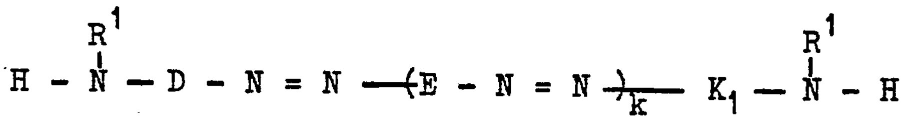
(5b)

(worin D, K, E, k und $R^1$ sowie R" die obengenannten Bedeutungen haben und $K_1$ den für K genannten Rest bedeutet, falls R" für Z steht), die in an und für sich üblicher und bekannter Weise durch Kupplung der entsprechenden Diazo- und Kupplungskomponenten hergestellt werden können, mit einer Dichlortriazin-Verbindung der allgemeinen Formel (6)

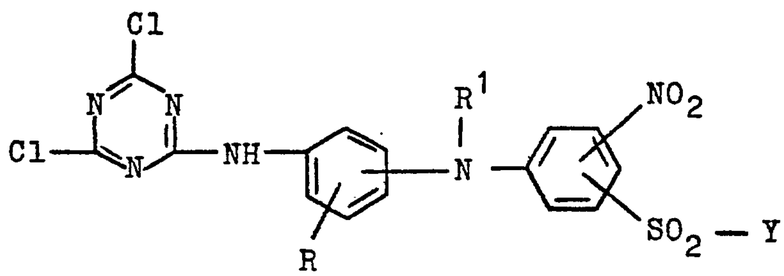
(6)

in welcher $R^1$, R und Y die obengenannten Bedeutungen haben, in einfach bzw. zweifach molarer Menge unter Abspaltung von ein bzw. zwei Mol Chlorwasserstoff umsetzt, oder daß man eine Verbindung der allgemeinen Formel (7)

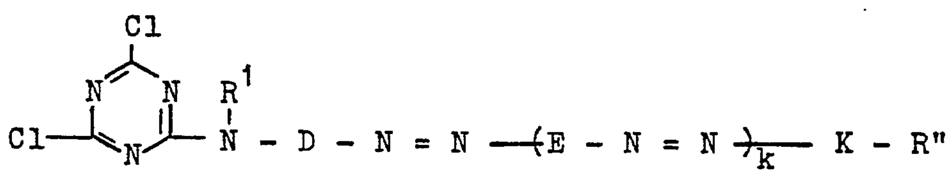
(7)

mit D, E, K, k, R" und $R^1$ der obengenannten Bedeutung, die in an und für sich üblicher Weise durch Umsetzung der Verbindung (5a) mit 2,4,6-Trichlor-s-triazin (Cyanurchlorid) hergestellt werden kann, mit einer Aminodiphenylamin-Verbindung der allgemeinen Formel (8)

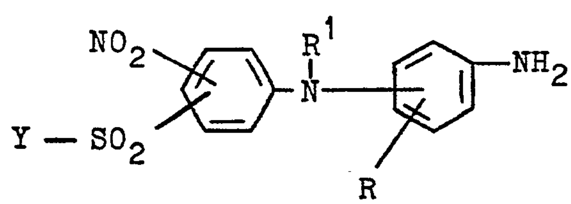
(8)

in welcher $R^1$, R und Y die obengenannten Bedeutungen haben, unter Abspaltung eines Mols Chlorwasserstoff umsetzt, oder daß man eine Diazoniumverbindung eines Amins der allgemeinen Formel (9)

$$Z - D - ( N = N - E )_k - NH_2 \qquad (9)$$

in welcher Z, D, E und k die für Formel (1) angegebenen Bedeutungen haben, mit einer kupplungsfähigen Verbindung der allgemeinen Formel H–K–R" mit K und R" der obengenannten Bedeutung kuppelt (hierbei ist Voraussetzung, wie dem Fachmann geläufig, daß, falls R" gleich die faserreaktive Gruppe Z ist, die Gruppe Z als ein Acylaminorest nicht in einer Stellung der Kupplungskomponente H–K–Z gebunden ist, die die Kupplung behindert, wie beispielsweise eine in 1-Stellung durch Z substituierte Naphthalinsulfonsäure).

Die Diazotierung der die faserreaktive Gruppierung der Formel (2) enthaltenden aromatischen Aminoverbindung bzw. Amino-Azoverbindung der allgemeinen Formel (9) erfolgt in an und für sich üblicher Weise, wie in wäßrigem, saurem, wie insbesondere salzsaurem, Medium mittels einem Alkalinitrit und bei einer Temperatur zwischen –5°C und +15°C. Die Kupplungsreaktion mit der Verbindung der allgemeinen Formel H–K–R" mit K und R" der obengenannten Bedeutung erfolgt anschließend ebenfalls bevorzugt in wäßrigem Medium gemäß an und für sich üblichen Verfahrensweisen von Kupplungsreaktionen, so bei einer Temperatur zwischen 0 und 30°C, bevorzugt zwischen 5 und 20°C, und bei einem pH-Wert zwischen 4 und 7, bevorzugt zwischen 5 und 6,5.

Kupplungskomponenten der allgemeinen Formel H–K–Z sind beispielsweise Verbindungen der allgemeinen Formel (10)

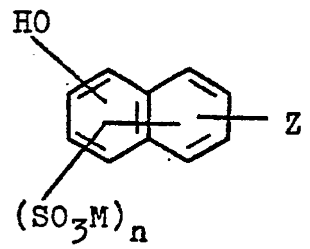

(10)

in welchen M und Z die obengenannten Bedeutungen haben und n die Zahl 1 oder 2 bedeutet.

Bevorzugt sind jedoch Kupplungskomponenten der allgemeinen Formel H–K–R" , in denen R" ein Wasserstoffatom bedeutet. Bevorzugt sind hiervon insbesondere durch Alkanoylamino- oder Benzoylamino-Gruppen substituierte 1-Naphthol-sulfonsäure-Verbindungen der allgemeinen Formel (11a)

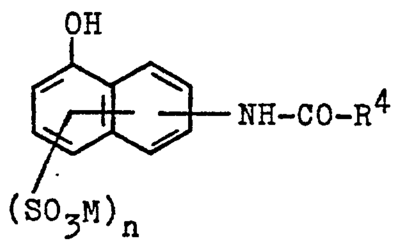

(11a)

in welcher
$R^4$ für eine Alkylgruppe von 1 bis 4 C-Atomen, bevorzugt die Methyl- oder Ethylgruppe, oder für die Phenylgruppe steht,
n die Zahl 1 oder 2 ist und
M die obengenannte Bedeutung besitzt, so beispielsweise das 3,6-Disulfo-8-acetylamino-1-naphthol, das 3,6-Disulfo-8-propionylamino-1-naphthol, das 3,6-Disulfo-8-benzoylamino-1-naphthol, das 4,6-Disulfo-8-acetylamino-1-naphthol, das 4,6-Disulfo-8-propionylamino-1-naphthol, das 4,6-Disulfo-8-benzoylamino-1-naphthol, das 3-Sulfo-7-acetylamino-1-naphthol, das 3-Sulfo-7-propionylamino-1-naphthol, das 3-Sulfo-6-acetylamino-1-naphthol, das 3-Sulfo-6-propionylamino-1-naphthol, das 3-Sulfo-5-acetylamino-1-naphthol, das 3-Sulfo-5-propionylamino-1-naphthol, das 3,5-Disulfo-6-acetylamino-1-naphthol, das 3,5-Disulfo-6-propionylamino-1-naphthol, das 5-Sulfo-8-acetylamino-1-naphthol, das 5-Sulfo-8-propionylamino-1-naphthol und das 5-Sulfo-8-benzoylamino-1-naphthol, ebenso Verbindungen entsprechend den allgemeinen Formeln (11b), (11c) und (11d)

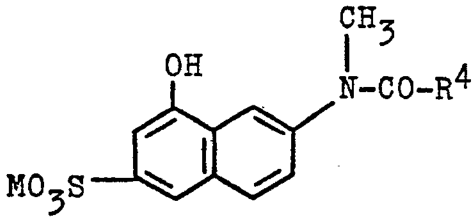

(11b)

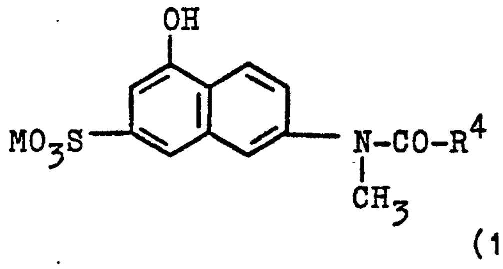

(11c)

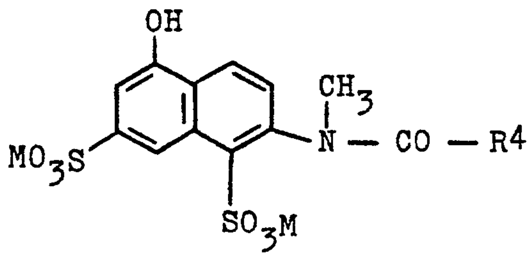

(11d)

in welchen M und $R^4$ die obengenannten Bedeutungen haben, weiterhin Verbindungen entsprechend der allgemeinen Formel (11e)

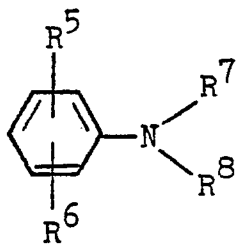

(11e)

in welcher
$R^5$ ein Wasserstoffatom, eine Sulfogruppe, eine Alkylgruppe von 1 bis 4 C-Atomen, wie die Ethylgruppe und insbesondere die Methylgruppe, eine Alkoxygruppe von 1 bis 4 C-Atomen, wie die Ethoxygruppe und insbesondere Methoxygruppe, ein Chloratom oder ein Bromatom ist,
$R^6$ ein Wasserstoffatom, eine Sulfogruppe, eine Alkylgruppe von 1 bis 4 C-Atomen, wie die Ethylgruppe und insbesondere Methylgruppe, eine Alkoxygruppe von 1 bis 4 C-Atomen, wie die Ethoxygruppe und insbesondere Methoxygruppe, ein Chloratom, ein Bromatom, eine Alkanoylaminogruppe, wie die Acetylaminogruppe, die Ureidogruppe oder eine Alkylsulfonylaminogruppe von 1 bis 4 C-Atomen bedeutet,
$R^7$ ein Wasserstoffatom oder eine Alkylgruppe von 1 bis 4 C-Atomen ist, die durch eine Hydroxy-, Cyano-, Carboxy-, Sulfo-, Sulfato-, Carbomethoxy- oder Carbethoxygruppe oder ein Phenylrest substituiert sein kann, oder ein Phenylrest ist, der durch Alkyl von 1 bis 4 C-Atomen, Alkoxy von 1 bis 4 C-Atomen, Chlor und/oder Sulfo substituiert sein kann, und
$R^8$ eine Alkylgruppe von 1 bis 4 C-Atomen ist, die durch eine Hydroxy-, Cyano-, Carboxy-, Sulfo-, Sulfato-, Carbomethoxy- oder Carbethoxygruppe oder ein Phenylrest substituiert sein kann, oder ein Phenylrest ist, der durch Alkyl von 1 bis 4 C-Atomen, Alkoxy von 1 bis 4 C-Atomen, Chlor und/oder Sulfo substituiert sein kann,
wobei $R^5$, $R^6$, $R^7$ und $R^8$ zueinander gleich oder voneinander verschieden sein können,
so beispielsweise das N-(β-Cyanoethyl)-anilin, das N-Ethyl-N-(β-sulfoethyl)-anilin, das N-Ethylanilin, das N,N-Di-(β-sulfoethyl)-anilin, das N-Ethyl-N-(β-hydroxyethyl)-anilin, das N-(β-Sulfoethyl)-anilin, das 3-Chlor-N,N-di-(β-sulfatoethyl)-anilin und das N,N-Bis-(β-hydroxyethyl)-anilin.

Die erfindungsgemäße Verfahrensvariante der Umsetzung einer Verbindung der allgemeinen Formel (5a) oder (5b) mit einer Verbindung der allgemeinen Formel (6) kann in wäßrigorganischem Medium durchgeführt werden; bevorzugt erfolgt sie in wäßriger Lösung. Die Reaktionstemperatur liegt in der Regel zwischen 0 und 50°C, bevorzugt zwischen 25 und 45°C, insbesondere zwischen 35 und 40°C. In der Regel wird ein pH-Wert zwischen 4 und 8, bevorzugt zwischen 5 und 7, eingehalten.

Die Kondensationsreaktion der Umsetzung einer Amino-Azoverbindung der allgemeinen Formel (5a) mit Cyanurchlorid zur Ausgangsverbindung (7) erfolgt in der Regel in wäßriger, neutraler bis saurer Lösung bei einer Temperatur zwischen -10°C und +20°C, vorzugsweise bei einer Temperatur zwischen 5 und 10°C und einem pH-Wert von 4 bis 6. Die erfindungsgemäße Kondensationsreaktion der Umsetzung der Dichlortriazin-Azoverbindung der allgemeinen Formel (7) mit der Aminodiphenylamin-Verbindung der allgemeinen Formel (8) erfolgt in der Regel anschließend, bevorzugt ohne weitere Isolierung der zuvor hergestellten Verbindung (7) aus dem Reaktionsansatz, in wäßrig-organischer Lösung, bevorzugt wäßriger, neutraler bis saurer Lösung in der Regel bei einer Temperatur zwischen 0 und 50°C, bevorzugt zwischen 10 und 40°C, und bevorzugt bei einem pH-Wert zwischen 3 und 7, insbesondere zwischen 6 und 6,5.

Kupplungskomponenten der allgemeinen Formel H–K–NHR[1] mit K und R[1] der obengenannten Bedeutung, die zur Herstellung der Ausgangsverbindungen der allgemeinen Formel (5) oder der Formel (7) dienen können, sind beispielsweise Verbindungen der allgemeinen Formel (12a), (12b) und (12c)

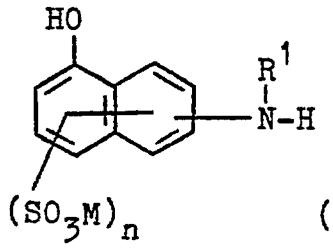

(12a)

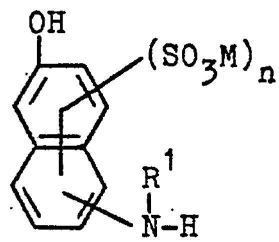

(12b)

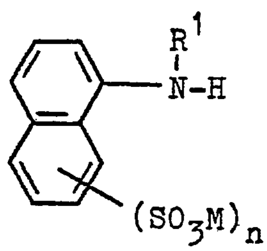

(12c)

in welchen M, R[1] und n die obengenannten Bedeutungen haben.

Die zur Herstellung der Verbindungen der allgemeinen Formel (1) dienenden Diazokomponenten entsprechend einer allgemeinen Formel Z–D–$NH_2$ und Z–D–N=N–E–$NH_2$ sind beispielsweise Verbindungen der allgemeinen Formeln (13a) bis (13c)

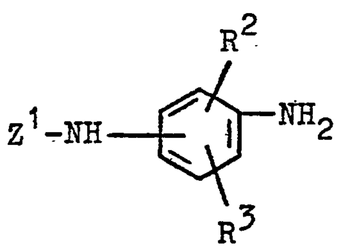

(13a)

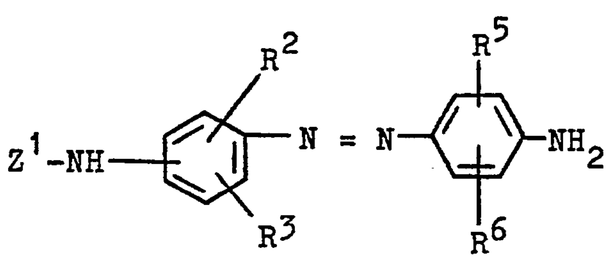

(13b)

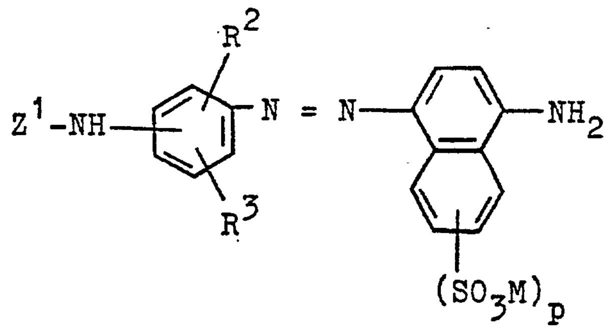

(13c)

in welchen M, $R^2$, $R^3$, $R^5$, $R^6$ und $Z^1$ die obengenannten Bedeutungen haben und
p die Zahl Null, 1 oder 2 ist.

Aus Kombinationen der oben genannten Diazokomponenten entsprechend den allgemeinen Formeln (13) und der zuvor erwähnten Kupplungskomponenten der allgemeinen Formeln (11) ergeben sich bevorzugte Mono- und Disazoverbindungen der allgemeinen Formel (1).

Die Ausgangsverbindungen der allgemeinen Formeln (9) oder (10) lassen sich in an und für sich üblicher Weise aus den Aminonaphthalin- und Anilinverbindungen, in denen anstelle des Formelrestes Z in den Formeln (9) bzw. (10) die Aminogruppe steht, mit Cyanurchlorid und der Aminodiphenylamin-Verbindung der allgemeinen Formel (8) herstellen. So erfolgt beispielsweise die Synthese der Verbindungen der allgemeinen Formel $Z{-}D{-}NH_2$ durch Umsetzung einer Verbindung der allgemeinen Formel $HR^1N{-}D{-}NH_2$ mit einer Dichlortriazinylamino-diphenylamin-Verbindung der allgemeinen Formel (6) in wäßrig-organischem oder bevorzugt wäßrigem Medium bei einer Temperatur zwischen 10 und 20°C und bei einem pH-Wert zwischen 6 und 6,5. Ähnlich kann die Kupplungskomponente H–K–Z synthetisiert werden.

Sofern die oben erwähnten Kondensationsreaktionen zwischen den Aminoverbindungen und Cyanurchlorid oder einer Dichlortriazinylamino-Verbindung und einer Aminoverbindung in wäßrig-organischem Medium erfolgt, ist das anteilige organische Lösemittel bevorzugt Aceton, Dioxan und Dimethylformamid. Eine der als Ausgangsverbindungen dienenden Amino-diphenylamin-Verbindungen der allgemeinen Formel (8) ist in Form ihrer β-Hydroxyethylsulfonyl-Vorstufe bekannt (s. Deutsche Auslegeschrift 1 179 317, Beispiel 5). Andere Amino-diphenylamin-Verbindungen der Formel (8) lassen sich über diese β-Hydroxyethylsulfon-Vorstufe in analoger Weise mit Hilfe der entsprechenden isomeren Acylamino-anilin- und (β-Hydroxyethylsulfonyl)-nitro-chlorbenzol-Verbindungen leicht herstellen. So erhält man beispielsweise das 4-Amino-2'-(β-hydroxyethylsulfonyl)-5'-nitro-diphenylamin durch Umsetzung von 1,4-Phenylendiamin und 2-Chlor-5-nitro-phenyl-(β-hydroxyethyl)-sulfon in methanolischer Lösung bei einer Temperatur zwischen 50 und 70°C innerhalb weniger Stunden, das sich aus der Reaktionslösung nach Abkühlen auf Raumtemperatur und Zugabe von Eiswasser kristallin in hoher Ausbeute abscheidet.

Aus diesen β-hydroxyethylsulfonyl-substituierten Aminodiphenylamin-Ausgangsverbindungen lassen sich die faserreaktiven Ausgangsverbindungen der allgemeinen Formel (8) in der für die Synthese von faserreaktiven Gruppen der Vinylsulfonreihe üblichen Weise synthetisieren. Bevorzugt werden sie zunächst in deren Sulfatoderivate durch Umsetzung mit einem Sulfatierungsmittel analog bekannten Verfahrensweisen, übergeführt. Sulfatierungsmittel sind bspw. Schwefelsäure oder Chlorsulfonsäure in einem organischen Lösemittel, wie Pyridin oder N-Methyl-pyrrolidon. Analoge Sulfatierungsreaktionen dieser Art sind beispielsweise aus der bereits genannten DE-AS 1 179 317 sowie aus der britischen Patentschrift Nr. 1 540 566 und der europäischen Patentanmeldungs-Veröffentlichung Nr. 0 036 383 bekannt. Bevorzugt erfolgt die Sulfatierung der β-Hydroxyethylsulfonyl-Ausgangsverbindung zur entsprechenden Verbindung der allgemeinen Formel (8), in welcher Y für die β-Sulfatoethyl-Gruppe steht, in 100%iger Schwefelsäure bei Temperaturen zwischen 10 und 30°C. Hieraus läßt sich die in Schwefelsäure lösliche Sulfatoverbindung nach Eintragen der Schwefelsäure-Lösung in Eiswasser isolieren.

In analoger Weise lassen sich die Verbindungen der allgemeinen Formel (8), in welchen Y für die β-Phosphatoethyl-Gruppe steht, durch Umsetzung mit einem geeigneten und hierfür üblichen Phosphatierungsmittel, wie Phosphorsäure, Polyphosphorsäure, herstellen.

Aus den β-Sulfatoethylsulfonyl-Verbindungen der allgemeinen Formel (8) erhält man die entsprechenden Vinylsulfonyl-Verbindungen (mit Y gleich der Vinylgruppe in Formel (8)) durch Umsetzung mit einem Alkali in wäßriger Lösung, beispielsweise indem man eine Lösung der Sulfatoverbindung in alkalisch-wäßriger Lösung bei einem pH-Wert zwischen 8 und 10 und bei einer Temperatur zwischen etwa 40 und 60°C für kurze Zeit behandelt.

Aus diesen Vinylsulfonyl-Verbindungen der allgemeinen Formel (8) lassen sich die entsprechenden β-Thiosulfatoethylsulfonyl-Verbindungen durch Umsetzung mit einem Alkalithiosulfat herstellen, so beispielsweise durch Umsetzung der Vinylsulfonyl-Verbindung der Formel (8) mit Natriumthiosulfat, vorteilhaft im Überschuß, wie in 21 bis 40%igem Überschuß, in wäßriger schwach saurer Lösung bei einer Temperatur zwischen 30 und 80°C.

Amino-diphenylamin-Ausgangsverbindungen der allgemeinen Formel (8) sind beispielsweise 1-Nitro-2-(4'-amino-phenylamino)-5-(β-sulfatoethylsulfonyl)-benzol, 1-Nitro-4-(4'-amino-phenylamino)-5-(β-sulfatoethylsulfonyl)-benzol, 1-Nitro-2-(3'-amino-phenylamino)-5-(β-sulfatoethylsulfonyl)-benzol, 1-Nitro-2-(4'-amino-3'-sulfo-phenylamino)-5-(β-sulfatoethylsulfonyl)-benzol und 1-Nitro-2-(4'-amino-2'-sulfophenylamino)-5-(β-sulfatoethylsulfonyl)-benzol.

Aromatische Amine der allgemeinen Formel $H_2N{-}D{-}NH_2$ , die als Diazokomponenten zur Synthese der erfindungsgemäßen Verbindungen dienen können, sind bspw. 1,4-Diamino-benzol, 1,3-Diamino-benzol, 1,4-Diamino-benzol-2-sulfonsäure, 1,3-Diamino-benzol-4-sulfonsäure, 1,4-Diamino-benzol-2,5-disulfonsäure, 1,3-Diamino-benzol-4,6-disulfonsäure, 1,4-Diamino-benzol-2,6-disulfonsäure, 1,4-Diamino-3-methyl-benzol, 1,3-Diamino-4-methoxy-benzol.

Verbindungen entsprechend der allgemeinen Formel $H{-}E{-}NH_2$ bzw. $H{-}E_1({-}SO_2{-}Y){-}NH_2$ , die zur Herstellung der erfindungsgemäßen Disazoverbindungen dienen können, sind bspw. Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methylanilin, 2-Amino-4-acetyl-aminobenzol-1-sulfonsäure, 1,3-Diaminobenzol, 1,3-Diamino-4-methyl- oder -methoxybenzol, 1,3-Diamino-benzol-4-sulfonsäure, 1-Aminonaphthalin, 1-Aminonaphthalin-6- oder -7-sulfonsäure, 3-Acetylaminoanilin, 2-Methylanilin, 2-Methoxyanilin, 3-Benzoylaminoanilin, 2,3-Dimethylanilin, 3,5-Dimethylanilin, 1-Amino-2-methoxy-5-acetylamino-benzol, ebenso auch 1-Amino-7-sulfo-5-(β-sulfatoethylsulfonyl)-naphthalin, 1-Amino-5-(β-sulfatoethylsulfonyl)-naphthalin, 1-Amino-6-(β-sulfatoethylsulfonyl)-naphthalin, 1-Amino-7-(β-sulfatoethylsulfonyl)-naphthalin, sowie deren entsprechenden β-Thiosulfatoethylsulfonyl-, β-Phosphatoethylsulfonyl-, β-Chlorethylsulfonyl- und Vinylsulfonyl-Derivate.

Weitere Ausgangsverbindungen, die der allgemeinen Formel $H{-}K{-}NHR^1$ entsprechen, sind beispielsweise Anilin, 3-Methylanilin, 3-Chloranilin, 2,5-Dimethylanilin, 2,5-Dimethoxyanilin, 3-Methoxyanilin, 3-Methyl-6-methoxyanilin, 3-Aminophenylharnstoff, 3-Acetylamino-6-methyl-anilin, 2-Amino-4-acetylamino-benzol-1-sulfonsäure, 1-Aminonaphthalin, 1-Aminonaphthalin-6- oder -7-sulfonsäure, 3-Acetylaminoanilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-Amino-naphthalin-8-sulfonsäure, 1-Amino-8-naphthol-3,6-disulfonsäure, 1-Amino-8-naphthol-4,6-disulfonsäure, 2-Methylanilin, 2-Methoxyanilin, 3-Benzoylaminoanilin, 2,3-Dimethylanilin, 3,5-Dimethylanilin, 1-Amino-2-methoxy-5-acetylamino-benzol, N-Methylanilin, 3-Chlor-N-methyl-anilin, N-(β-Cyanoethyl)-anilin und N-Ethylanilin.

Kupplungskomponenten, die erfindungsgemäß zur Herstellung der Azoverbindungen der allgemeinen Formel (1) dienen können und die der allgemeinen Formel H–K–Z entsprechen, sind beispielsweise die nachfolgenden Aminonaphthol-sulfonsäuren, an deren Amino- oder Methylamino-Gruppe der faserreaktive Rest $Z^3$ der allgemeinen Formel (2c)

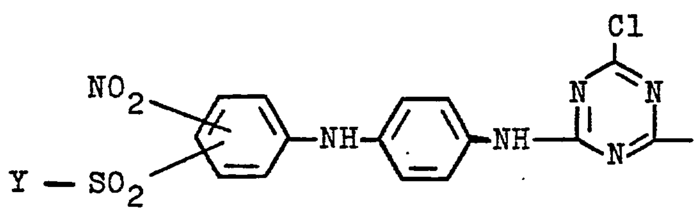

(2c)

in welcher Y die obengenannte Bedeutung besitzt und die Gruppe $-SO_2{-}Y$ und die Nitrogruppe zueinander meta-ständig an den Benzolkern gebunden sind, jedoch beide nicht gleichzeitig ortho-ständig zur Aminogruppe stehen, gebunden ist: 1-Amino-3,6-disulfo-8-naphthol, 1-Amino-4,6-disulfo-8-naphthol, 2-Amino-3,6-disulfo-8-naphthol, 3-Amino-6-sulfo-8-naphthol, 3-Amino-4,6-disulfo-8-naphthol, 3-Methylamino-6-sulfo-8-naphthol, 1-Amino-7-sulfo-5-naphthol, 2-Amino-6-sulfo-8-naphthol, 1-Amino-4-sulfo-8-naphthol, 2-Methylamino-6-sulfo-8-naphthol, 2-Amino-5-naphthol-7-sulfonsäure, 1-Amino-2,4-disulfo-8-naphthol.

Von den erfindungsgemäßen Azoverbindungen der allgemeinen Formel (1) können insbesondere solche Gruppen von Verbindungen hervorgehoben werden, die den allgemeinen Formeln (14), (15), (16), (17) und (18) entsprechen:

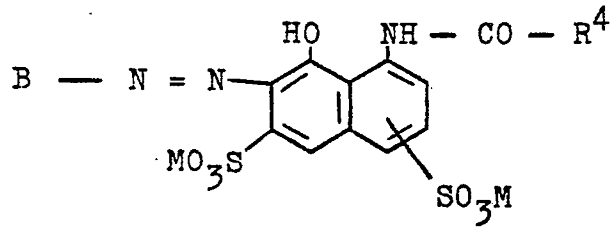

(14)

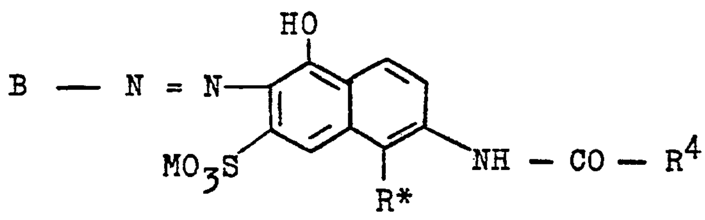

(15)

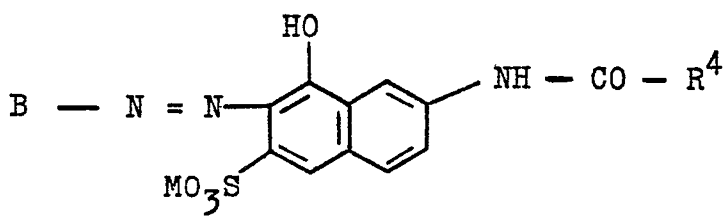

(16)

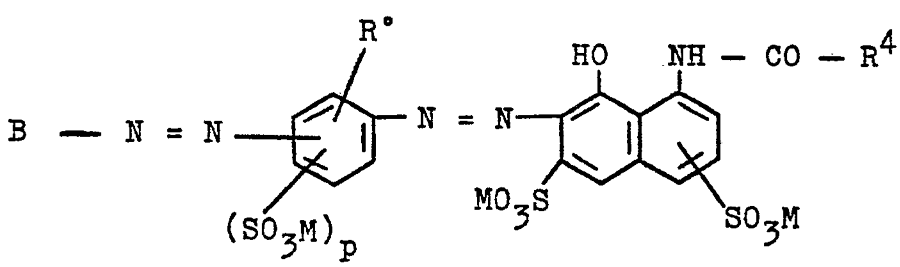

(17)

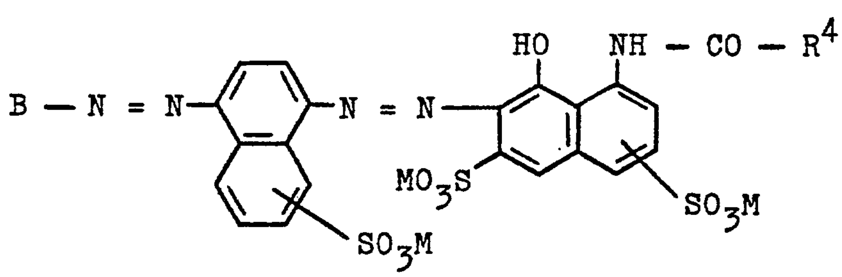

(18)

in welchen
M die obengenannte Bedeutung besitzt,
B ein Rest der allgemeinen Formel (4a), (4b), (4c), (4d) oder (4e) ist, worin Z bevorzugt die Bedeutung von $Z^2$ hat,
p die Zahl Null, 1 oder 2 ist,
R* ein Wasserstoffatom oder eine Sulfogruppe ist,
R° ein Wasserstoffatom, ein Chlor- oder Bromatom, eine Alkanoylaminogruppe von 2 bis 5 C-Atomen, wie Acetylaminogruppe, eine Sulfo-, Carboxy-, Methyl-, Ethyl-, Methoxy- oder Ureidogruppe ist und
$R^4$ hier die Methyl-, Ethyl- oder Phenylgruppe bedeutet.

Insbesondere bevorzugt ist in diesen Verbindungen der Formelrest Y eine β-Sulfatoethyl-Gruppe.

Von den Verbindungen der allgemeinen Formel (14) bis (18) sind insbesondere diejenigen bevorzugt, bei denen eine Sulfogruppe im Formelrest B in ortho-Stellung zur Azogruppe an den Benzol- bzw. Naphthalinkern gebunden ist.

Die Abscheidung und Isolierung der erfindungsgemäß hergestellten Verbindungen der allgemeinen Formel (1) aus den Syntheselösungen kann nach allgemein bekannten Methoden erfolgen, so beispielsweise entweder durch Ausfällen aus dem Reaktionsmedium mittels Elektrolyten, wie beispielsweise Natriumchlorid oder Kaliumchlorid, oder durch Eindampfen der Reaktionslösung, beispielsweise Sprühtrocknung, wobei dieser Reaktionslösung eine Puffersubstanz zugefügt werden kann.

Die erfindungsgemäßen Verbindungen der allgemeinen Formel (1) haben faserreaktive Eigenschaften und besitzen sehr gute Farbstoffeigenschaften. Sie können deshalb zum Färben (einschließlich Bedrucken) von hydroxygruppenhaltigen und/oder carbonamidgruppenhaltigen Materialien verwendet werden. Auch können die bei der Synthese der erfindungsgemäßen Verbindungen anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der erfindungsgemäßen Verbindungen der allgemeinen Formel (1) zum Färben (einschließlich Bedrucken) von hydroxy- und/oder carbonamidgruppenhaltigen Materialien bzw. Verfahren zu deren Anwendung auf diesen Substraten. Eingeschlossen ist hierbei Massefärbung, wie bspw. von Folien aus Polyamid. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Verbindungen der Formel (1) lassen sich, gemäß der erfindungsgemäßen Anwendung, auf den genannten Substraten, insbesondere auf den genannten Fasermaterialien, nach den für wasserlösliche Farbstoffe, insbesondere faserreaktive Farbstoffe, bekannten Anwendungstech niken applizieren und fixieren, so beispielsweise, indem man die Azoverbindung der allgemeinen Formel (1) in gelöster Form auf das Substrat aufbringt oder sie darin einbringt und sie auf diesem oder in diesem, gegebenenfalls durch Hitzeeinwirkung und/oder gegebenenfalls durch Einwirkung eines alkalisch wirkenden Mittels, fixiert. Solche Färbe- und Fixierweisen sind in der Literatur zahlreich beschrieben.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, sehr gute Farbausbeuten sowie einen ausgezeichneten Farbaufbau. Man färbt bevorzugt in wäßrigem Bad bei Temperaturen zwischen 40 und 105°C, gegebenenfalls bei Temperaturen bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach den Klotzverfahren werden auf Cellulosefasern ebenfalls gute Farbausbeuten und ein guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig, beispielsweise durch Bedrucken mittels einer die erfindungsgemäße Verbindung und Natriumbicarbonat oder ein anderes säurebindendes Mittel enthaltenden Druckpaste und anschließendes Dämpfen bei 100 bis 103°C, oder zweiphasig, beispielsweise durch Bedrucken mittels einer die erfindungsgemäße Verbindung enthaltenden neutralen oder schwach sauren Druckpaste und anschließendes Fixieren der erfindungsgemäßen Verbindung entweder durch Hindurchführen des bedruckten Materials durch ein heißes alkali- und elektrolythaltiges Bad oder durch Überklotzen mit einer alkalischen elektrolythaltigen Klotzflotte und anschließendes Verweilen dieses überklotzten Materials oder Dämpfen oder Behandlung mit Trockenhitze, durchgeführt werden können, erhält man farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Verbindungen erhaltenen Fixiergrade sehr hoch.

Bei der Fixierung mittels Trockenhitze nach den üblichen Thermofixierverfahren verwendet man Heißluft von 120 bis 200°C. Bei der Fixierung mittels Wasserdampf kann neben dem üblichen Wasserdampf von 101 bis 103°C auch überhitzter Dampf und Druckdampf von Temperaturen bis zu 160°C eingesetzt werden.

Die säurebindenden und die Fixierung der Verbindung der Formel (1) auf den Cellulosefasern bewirkenden Mittel sind beispielsweise wasserlösliche basische Salze der Alkalimetalle und Erdalkalimetalle

von organischen oder anorganischen Säuren oder Verbindungen, die in der Hitze Alkali freisetzen. Insbesondere sind die Alkalimetallhydroxide und Alkalimetallsalze von schwach bis mittelstarken anorganischen oder organischen Säuren zu nennen, vorzugsweise deren Natrium- und Kaliumverbindungen. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas und Trinatriumphosphat.

Durch die Behandlung der erfindungsgemäßen Verbindungen (Farbstoffe) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile wegen ihrer guten Kaltwasserlöslichkeit auswaschen lassen.

Die mit den erfindungsgemäßen Verbindungen (Farbstoffen) hergestellten Färbungen und Drucke auf Cellulosematerialien besitzen eine hohe Farbstärke, gute Lichtechtheiten und gute bis sehr gute Naßechtheiten, wie beispielsweise gute bis sehr gute Waschechtheiten bei 60 bis 95°C, auch in Gegenwart von Perboraten, saure und alkalische Walk-, Überfärbe- und Schweißechtheiten, gute bis sehr gute saure und alkalische Schweißechtheiten, eine hohe Dampfbeständigkeit, gute bis sehr gute Alkali-, Säure-, Wasser- und Seewasserechtheiten, desweiteren eine gute Plissierechtheit, Bügelechtheit und Reibechtheit. Ebenso besitzen sie eine sehr gute Säurelagerbeständigkeit ("acid fading") beim Lagern von feuchten, noch Essigsäure enthaltendem gefärbtem Material (s. hierzu deutsche Auslegeschrift Nr. 23 22 236).

Besonders hervorzuheben sind die guten Naßlichtechtheiten der mit destilliertem Wasser oder Trinkwasser befeuchteten Färbungen und Drucke auf Cellulosefasermaterialien sowie deren alkalische Schweißlichtechtheit. Diesbezüglich sind die erfindungsgemäßen Farbstoffe den anfangs erwähnten bekannten und konstitutionell nächst vergleichbaren faserreaktiven Farbstoffen, die als Reaktivgruppe ebenfalls einen Monochlortriazin-Rest und eine faserreaktive Gruppe der Vinylsulfon-Reihe enthalten, in überraschender Weise überlegen.

Die Färbungen auf Polyurethanfasern oder natürlichen oder synthetischen Polyamidfasern werden üblicherweise aus saurem Milieu ausgeführt. So kann man beispielsweise dem Färbebad Essigsäure und/oder Ammoniumsulfat, Natriumacetat und/oder Ammoniumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Das Verfahren des Färbens auf Wolle erfolgt hierbei in üblicher und bekannter Färbeweise, indem die faserreaktive Verbindung der allgemeinen Formel (1) bevorzugt zunächst aus saurem Färbebad mit einem pH von etwa 3,5 bis 5,5 unter Kontrolle des pH-Wertes dem Ausziehprozeß unterworfen wird und gegen Ende der Färbezeit der pH-Wert in den neutralen und gegebenenfalls schwach alkalischen Bereich bis zu einem pH-Wert von 8,5 verschoben wird, um besonders bei einer erwünschten Erzielung von hohen Farbtiefen die volle reaktive Bindung zwischen diesem Farbstoff der Formel (1) und der Faser herbeizuführen. Gleichzeitig wird der nicht reaktiv gebundene Farbstoffanteil abgelöst.

Die hier beschriebene Verfahrensweise gilt auch zur Herstellung von Färbungen auf Fasermaterialien aus anderen natürlichen Polyamiden oder aus synthetischen Polyamiden und Polyurethanen. Die Färbungen werden bei Temperaturen von 60 bis 100°C durchgeführt, jedoch können sie auch in geschlossenen Färbeapparaturen bei Temperaturen bis zu 106°C erfolgen. Da die Wasserlöslichkeit der Verbindungen der allgemeinen Formel (1) sehr gut ist, lassen sie sich auch mit Vorteil bei üblichen kontinuierlichen Färbeverfahren einsetzen. Die Farbstärke der erfindungsgemäßen Verbindungen der allgemeinen Formel (1) ist sehr hoch. Sie liefern auf den Fasermaterialien, insbesondere beim reaktiven Färben von Wolle, farbstarke, echte Färbungen. Bei Anwendung von Färbetemperaturen von 100 bis 106°C ist eine hohe Baderschöpfung festzustellen.

Bei den mit den erfindungsgemäßen Verbindungen der allgemeinen Formel (1) erhältlichen Färbungen kann auf eine ansonsten übliche ammoniakalische Nachbehandlung der gefärbten Ware verzichtet werden. Sie zeigen einen sehr guten Farbaufbau, wobei die brillante Nuance in tiefen Tönen erhalten bleibt. Darüber hinaus sind sie mit anderen faserreaktiven Wollfarbstoffen, was ein überraschend egales Färben der Faser ermöglicht. Ebenso läßt sich Material aus Wollfasern unterschiedlicher Provenienz mit der erfindungsgemäßen Verbindung egal färben. Zur Verbesserung des Egalisierverhaltens kann gegebenenfalls ein übliches Egalisierhilfsmittel, wie beispielsweise N-Methyltaurin, zugesetzt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in diesen Beispielen formelmäßig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Beispiel 1

(a) Eine Lösung von 18 Teilen 1,3-Diaminobenzol-4-sulfonsäure in einem Gemisch aus 20 Teilen Wasser und 18 Volumenteilen einer wäßrigen 5n-Natronlauge wird unter Rühren bei einem pH-Wert zwischen 4 und 5 allmählich in eine Suspension von 18 Teilen Cyanurchlorid in 60 Teilen Eiswasser gegeben; die Reaktionstemperatur wird durch Außenkühlung bei 5 bis 10°C gehalten. Es wird unter diesen Reaktionsbedingungen noch zwei Stunden nachgerührt. Sodann gibt man unter Einhaltung eines pH-Wertes von 6 mittels verdünnter wäßriger Natriumcarbonatlösung eine Suspension von 42 Teilen 1-Nitro-2-(4'-aminophenylamino)-5-(β-sulfatoethylsulfonyl)-benzol in 50 Teilen Wasser hinzu, wobei man die Reaktionstemperatur allmählich auf 25°C erhöht. Nach beendeter Kondensationsreaktion wird die erhaltene Lösung mit 18 Teilen einer 31%igen wäßrigen Salzsäure sauer gestellt und durch Zugabe von Eis auf eine Temperatur von 0 bis 5°C abgekühlt; die Diazotierungsreaktion wird in üblicher Weise mit einer wäßrigen 1n-Natriumnitritlösung durchgeführt.

b) Die unter a) erhaltene Diazoniumsalz-Suspension wird in eine schwach saure Lösung von 41 Teilen 1-Acetylamino-8-naphthol-3,6-disulfonsäure in 50 Teilen Wasser gegeben. Der pH-Wert wird auf 6 gestellt, und die Kupplungsreaktion wird unter Einhaltung dieses pH-Wertes mittels verdünnter wäßriger Natriumcarbonatlösung und bei einer Temperatur zwischen 6 und 10°C zu Ende geführt.

Die erfindungsgemäße Azoverbindung wird in üblicher Weise isoliert. Es wird ein dunkelrotes elektrolythaltiges Pulver des Natriumsalzes der Verbindung der Formel

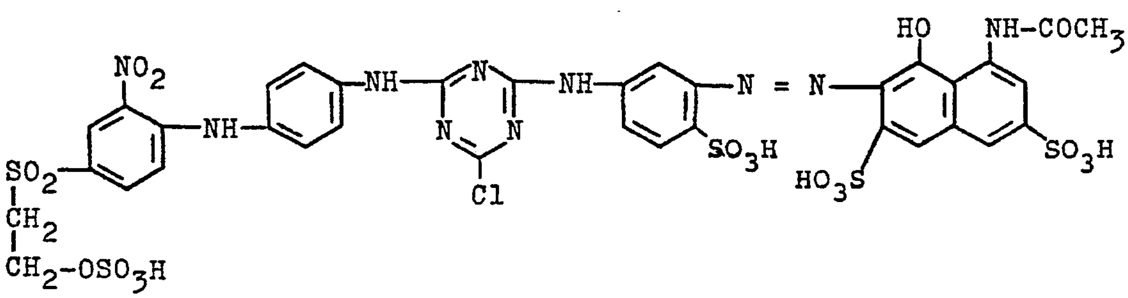

erhalten, die sehr gute faserreaktive Farbstoffeigenschaften besitzt, in wäßriger Lösung ein Absorptionsmaximum bei 509 nm zeigt und nach den üblichen Applikations- und Fixiermethoden auf den in der Beschreibung genannten Materialien, insbesondere auf Cellulosefasermaterialien, wie Baumwolle, farbstarke gelbstichig rote Färbungen und Drucke mit guten Waschechtheitseigenschaften liefert.

Beispiele 2 bis 21

In den nachfolgenden Tabellenbeispielen sind weitere erfindungsgemäße Monoazoverbindungen entsprechend einer allgemeinen Formel (A)

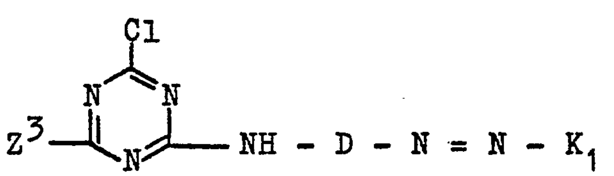

(A)

beschrieben, in welcher D dem Rest der aromatischen Diaminoverbindung $H_2N\text{–}D\text{–}NH_2$ , $K_1$ dem Rest einer Kupplungskomponente $H\text{–}K_1$ und $Z^3$ dem Amino-Rest des Amino-nitro-diphenylamins der in der Beschreibung genannten allgemeinen Formel (8) entspricht. Sie lassen sich in erfindungsgemäßer Weise, beispielsweise analog dem obigen Ausführungsbeispiel, aus den aus der Formel ersichtlichen Komponenten (wie der aromatischen Diaminoverbindung, Cyanurchlorid und der Amino-nitro-diphenylamin-Verbindung $H\text{–}Z^3$ gemäß der in der Beschreibung genannten allgemeinen Formel (8) sowie der Kupplungskomponente entsprechend der allgemeinen Formel $H\text{–}K_1$) herstellen. Sie besitzen sehr gute faserreaktive

Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke in dem in dem jeweiligen Tabellenbeispiel angegebenen Farbton auf Baumwolle mit guten Echtheiten, wie solchen, die im Beispiel 1 erwähnt sind.

Azoverbindung entsprechend Formel (A)

| Bsp. | Amino-diphenylamin $H-Z^3$ | Rest -D- entspr. Diamin $H_2N-D-NH_2$ | Kupplungskomponente $H-K_1$ | Farbton |
|---|---|---|---|---|
| 2 | 1-Nitro-2-(4'-aminophenylamino)-5-(ß-sulfatoethylsulfonyl)-benzol | 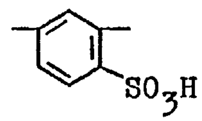 | 2-Acetylamino-5-naphthol-1,7-disulfonsäure | orange |
| 3 | 1-Nitro-4-(4'-aminophenylamino)-5-(ß-sulfatoethylsulfonyl)-benzol | dito | 3-Acetylamino-5-naphthol-7-sulfonsäure | orange |
| 4 | dito | dito | 1-Benzoylamino-8-naphthol-4,6-disulfonsäure | rot |
| 5 | 1-Nitro-2-(3'-aminophenylamino)-5-(ß-sulfatoethylsulfonyl)-benzol | dito | dito | rot |
| 6 | 1-Nitro-2-(3'-aminophenylamino)-5-(ß-phosphatoethylsulfonyl)-benzol | dito | 1-Benzoylamino-8-naphthol-3,6-disulfonsäure | rot |
| 7 | 1-Nitro-2-(4'-aminophenyl)-amino)-5-(ß-sulfatoethylsulfonyl)-benzol | 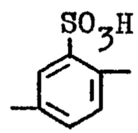 | 1-Acetylamino-8-naphthol-3,6-disulfonsäure | rot |
| 8 | 1-Nitro-2-(4'-aminophenyl)-amino)-5-vinylsulfonyl-benzol | dito | dito | rot |
| 9 | 1-Nitro-2-(4'-aminophenyl-methylamino)-5-(ß-sulfato-ethylsulfonyl)-benzol | dito | dito | rot |

Azoverbindung entsprechend Formel (A)

| Bsp. | Amino-diphenylamin $H-Z^3$ | Rest -D- entspr. Diamin $H_2N-D-NH_2$ | Kupplungskomponente $H-K_1$ | Farbton |
|---|---|---|---|---|
| 10 | 1-Nitro-2-(4'-aminophenyl-amino)-5-(ß-sulfatoethyl-sulfonyl)-benzol | 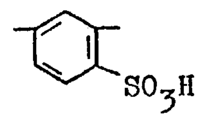 | 2-Acetylamino-5-naphthol-7-sulfonsäure | orange |
| 11 | 1-Nitro-4-(4'-aminophenyl-amino)-5-(ß-sulfatoethyl-sulfonyl)-benzol | dito | dito | orange |
| 12 | dito | 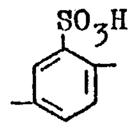 | dito | orange |
| 13 | 1-Nitro-2-(4'-aminophenyl-amino)-5-(ß-sulfatoethyl-sulfonyl)-benzol | dito | dito | orange |
| 14 | dito | 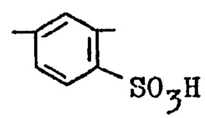 | 2-Benzoylamino-5-naphthol-7-sulfonsäure | orange |
| 15 | dito | 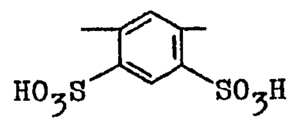 | 1-Acetylamino-8-naphthol-3,6-disulfonsäure | rot |
| 16 | dito | 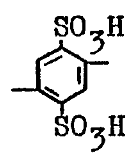 | 3-Acetylamino-5-naphthol-7-sulfonsäure | orange |

Azoverbindung entsprechend Formel (A)

| Bsp. | Amino-diphenylamin $H-Z^3$ | Rest -D- entspr. Diamin $H_2N-D-NH_2$ | Kupplungskomponente $H-K_1$ | Farbton |
|---|---|---|---|---|
| 17 | 1-Nitro-2-(4'-aminophenyl-methylamino)-5-(ß-sulfato-ethylsulfonyl)-benzol | 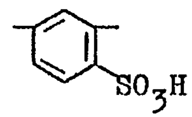 | 1-Naphthol-4,8-disulfonsäure | rot |
| 18 | 1-Nitro-4-(4'-aminophenyl-amino)-5-(ß-sulfatoethyl-sulfonyl)-benzol | dito | dito | rot |
| 19 | 1-Nitro-2-(4'-aminophenyl-amino)-5-(ß-sulfatoethyl-sulfonyl)-benzol | 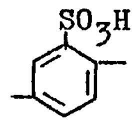 | dito | rot |
| 20 | dito | dito | 1-Naphthol-4-sulfonsäure | rot |
| 21 | dito | 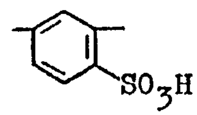 | dito | rot |

Beispiel 22

Die in Beispiel 1a) erhaltene Diazoniumsuspension wird in eine schwach saure Lösung von 22 Teilen 1-Naphthylamin-6-sulfonsäure in 100 Teilen Wasser gegeben. Der pH-Wert wird auf 5 gestellt, und die Kupplungsreaktion wird unter Einhaltung dieses pH-Wertes mittels wäßriger Natriumcarbonatlösung bei einer Temperatur von 5 bis 10°C zu Ende geführt. Anschließend wird die Lösung mit 30 Teilen einer 31%igen wäßrigen Salzsäure sauer gestellt und die Diazotierungsreaktion in üblicher Weise mit einer wäßrigen 1n-Natriumnitritlösung durchgeführt.

Die so erhaltene Diazoniumsalzsuspension wird in eine schwach saure Lösung von 40 Teilen 1-Acetylamino-8-naphthol-3,6-disulfonsäure in 100 Teilen Wasser gegeben. Der pH-Wert wird auf 6 gestellt und die Kupplungsreaktion unter Einhaltung des pH-Wertes mittels wäßriger Natriumcarbonatlösung bei einer Temperatur von 5 bis 10°C zu Ende geführt.

Die erfindungsgemäße Disazoverbindung wird in üblicher Weise isoliert. Es wird ein schwarzes elektrolythaltiges Pulver des Natriumsalzes der Verbindung der Formel

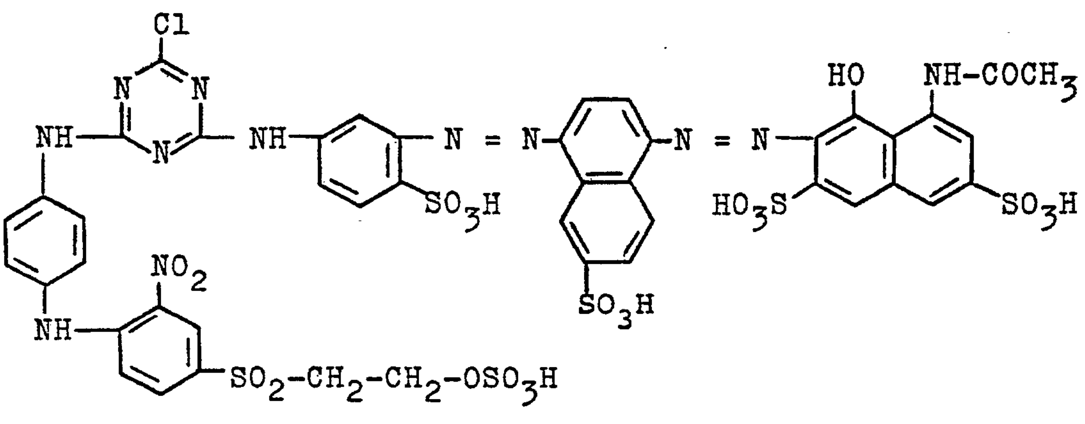

erhalten, das auf Baumwolle farbstarke rotstichig marineblaue, echte Färbungen liefert.

Beispiele 23 bis 42

In den nachfolgenden Tabellenbeispielen sind weitere erfindungsgemäße Disazoverbindungen entsprechend einer allgemeinen Formel (B)

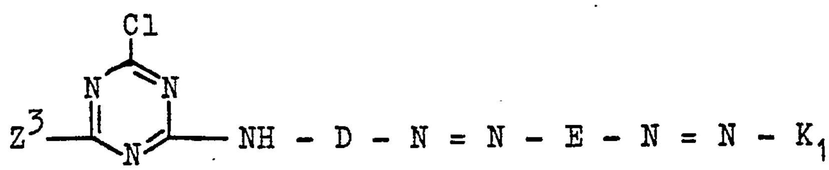

(B)

beschrieben, in welcher D dem Rest der aromatischen Diaminoverbindung $H_2N-D-NH_2$ , E dem bivalenten Rest der kupplungs- und diazotierfähigen Mittelkomponente, $K_1$ dem Rest einer Kupplungskomponente $H-K_1$ und $Z^3$ dem Aminorest des Amino-nitro-diphenylamins der in der Beschreibung genannten allgemeinen Formel (8) entspricht. Sie lassen sich in erfindungsgemäßer Weise, beispielsweise analog dem obigen Ausführungsbeispiel 22, aus den aus der Formel ersichtlichen Komponenten (wie der aromatischen Diaminoverbindung, Cyanurchlorid und der Amino-nitro-diphenylamin-Verbindung $H-Z^3$ gemäß der in der Beschreibung genannten allgemeinen Formel (8), der Mittelkomponente sowie der Kupplungskomponente entsprechend der allgemeinen Formel $H-K_1$) herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, in dem in dem jeweiligen Tabellenbeispiel angegebenen Farbton auf Baumwolle.

Disazoverbindung entsprechend Formel (B)

| Bsp. | Amino-diphenylamin $H-Z^3$ | Formelrest -D-N=N-E- | Kupplungskomponente $H-K_1$ | Farbton |
|---|---|---|---|---|
| 23 | 1-Nitro-2-(4'-aminophenyl-amino)-5-(ß-sulfatoethyl-sulfonyl)-benzol | 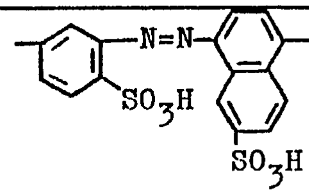 | 1-Benzoylamino-8-naphthol-3,6-disulfonsäure | marine-blau |
| 24 | dito | dito | 1-Acetylamino-8-naphthol-4,6-disulfonsäure | marine-blau |
| 25 | dito | dito | 2-Acetylamino-5-naphthol-7-sulfonsäure | marine-blau |
| 26 | 1-Nitro-4-(4'-aminophenyl-amino)-5-(ß-sulfatoethyl-sulfonyl)-benzol | dito | 1-Acetylamino-5-naphthol-7-sulfonsäure | marine blau |
| 27 | 1-Nitro-2-(4'-aminophenyl)-amino)-5-(ß-sulfatoethyl-sulfonyl)-benzol | 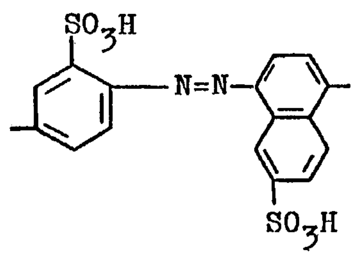 | 1-Acetylamino-8-naphthol-3,6-disulfonsäure | marine-blau |
| 28 | 1-Nitro-2-(4'-aminophenyl)-amino -5-vinylsulfonyl-benzol | dito | dito | marine-blau |

Disazoverbindung entsprechend Formel (B)

| Bsp. | Amino-diphenylamin $H-Z^3$ | Formelrest -D-N=N-E- | Kupplungskomponente $H-K_1$ | Farbton |
|---|---|---|---|---|
| 29 | 1-Nitro-2-(4'-aminophenyl-methylamino)-5-(ß-sulfato-ethylsulfonyl)-benzol | 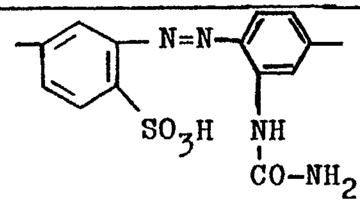 | dito | marine-blau |
| 30 | 1-Nitro-2-(4'-aminophenyl-amino)-5-(ß-sulfatoethyl-sulfonyl)-benzol | dito | 1-Acetylamino-8-naphthol-4,6-disulfonsäure | marine-blau |
| 31 | dito | 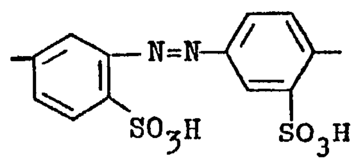 | 1-Benzoylamino-8-naphthol-3,6-disulfonsäure | marine-blau |
| 32 | dito | 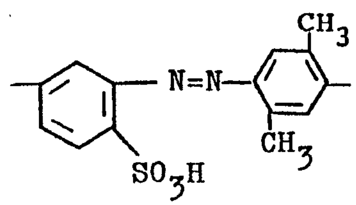 | 1-Acetylamino-8-naphthol-3,6-disulfonsäure | marine-blau |

Disazoverbindung entsprechend Formel (B)

| Bsp. | Amino-diphenylamin H-$Z^3$ | Formelrest -D-N=N-E- | Kupplungskomponente H-$K_1$ | Farbton |
|---|---|---|---|---|
| 33 | 1-Nitro-2-(4'-aminophenylamino)-5-(ß-sulfatoethylsulfonyl)-benzol | 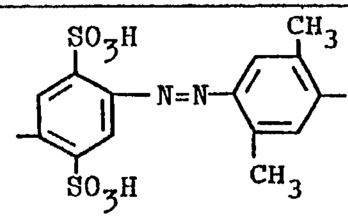 | 1-Acetylamino-8-naphthol-3,6-disulfonsäure | marine-blau |
| 34 | dito | dito | 2-Acetylamino-5-naphthol-7-sulfonsäure | marine-blau |
| 35 | dito | 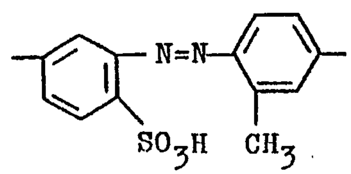 | 1-Acetylamino-8-naphthol-3,6-disulfonsäure | marine-blau |
| 36 | dito | 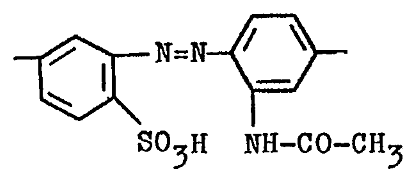 | dito | marine-blau |
| 37 | dito | 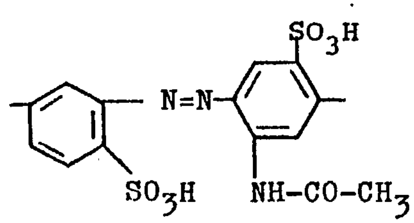 | dito | marine-blau |

Disazoverbindung entsprechend Formel (B)

| Bsp. | Amino-diphenylamin $H-Z^3$ | Formelrest -D-N=N-E- | Kupplungskomponente $H-K_1$ | Farbton |
|---|---|---|---|---|
| 38 | 1-Nitro-2-(4'-aminophenyl-amino)-5-(ß-sulfatoethyl-sulfonyl)-benzol | 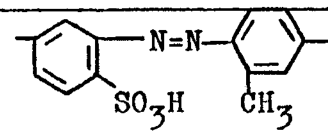 | 1-Acetylamino-8-naphthol-4,6-disulfonsäure | marine-blau |
| 39 | dito | dito | 2-Acetylamino-5-naphthol-7-sulfonsäure | marine-blau |
| 40 | dito | 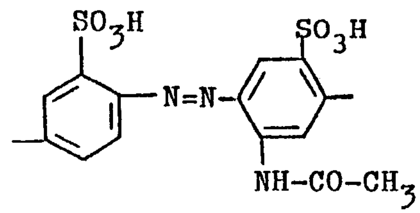 | 1-Acetylamino-8-naphthol-3,6-disulfonsäure | marine-blau |
| 41 | dito | 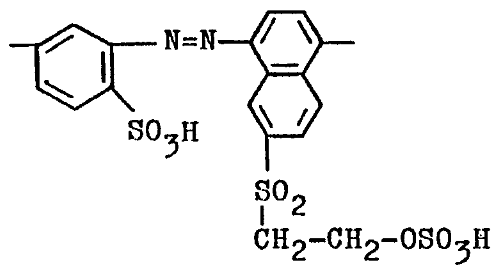 | dito | marine-blau |
| 42 | dito | 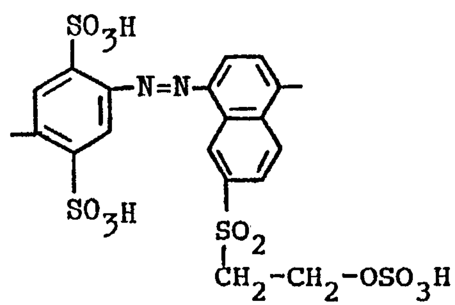 | dito | marine-blau |

Beispiel 43

Zu 27,7 Teilen salzsauer diazotiertem 3-Acetylamino-6-sulfo-anilin werden bei 5°C eine Suspension von 36,1 Teilen 1-Acetylamino-8-naphthol-3,6-disulfonsäure in 100 Teilen Wasser gegeben. Die Kupplung erfolgt bei einem pH-Wert von 6. Nach beendeter Kupplung wird die Acetylaminogruppe der erhaltenen Azoverbindung bei einem pH-Wert von 14 (nach Zugabe von 60 Teilen einer 33%igen wäßrigen Natronlauge) bei einer Temperatur von 95°C innerhalb von 2 Stunden hydrolysiert. Anschließend kühlt man die Lösung auf 5°C ab und stellt mit 29 Teilen einer 98%igen Schwefelsäure einen pH-Wert von 4,5 ein. Sodann werden 37 Teile festes Cyanurchlorid langsam hinzugegeben; die Kondensationsreaktion führt man bei einem pH-Wert von 4,5 unter Einhaltung dieses pH-Wertes mittels verdünnter wäßriger Natriumhydrogencarbonatlösung durch. Nach beendeter Kondensationsreaktion gibt man zu diesem Ansatz eine Suspension von 84 Teilen 1-Nitro-2-(4'-aminophenylamino)-5-(β-sulfatoethylsulfonyl)-benzol in 150 Teilen Wasser und stellt einen pH-Wert von 6,5 mittels einer verdünnten wäßrigen Natriumhydrogencarbonatlösung ein; unter allmählicher Erwärmung erhöht man die Reaktionstemperatur auf 45°C unter Einhaltung dieses pH-Wertes von 6,5 und führt auf diese Weise die zweite Kondensationsreaktion zu Ende.

Die erfindungsgemäße Disazoverbindung wird in üblicher Weise isoliert. Es wird ein dunkelrotes elektrolythaltiges Pulver des Natriumsalzes der Verbindung der Formel

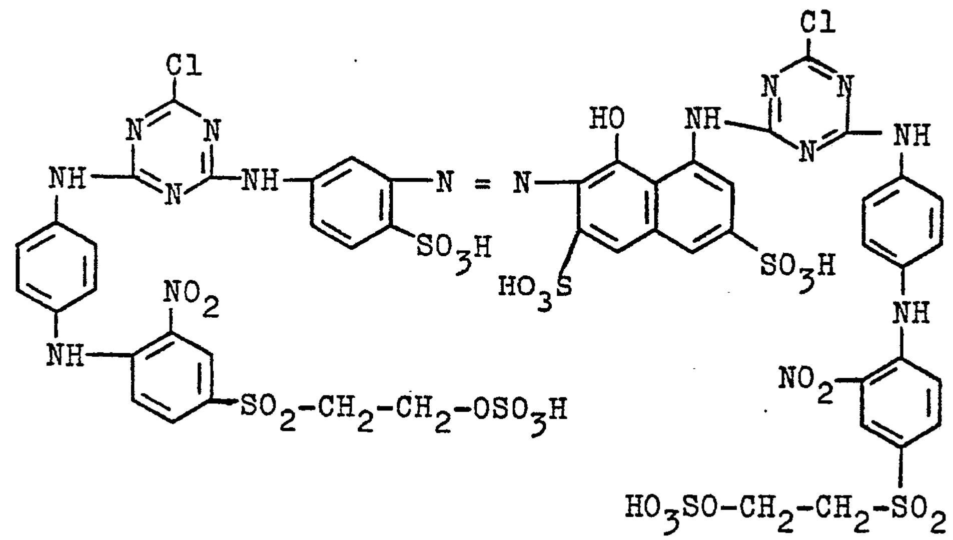

das auf Baumwolle farbstarke rote, echte Färbungen liefert.

Beispiele 44 bis 47

In den nachfolgenden Tabellenbeispielen sind weitere erfindungsgemäße Azoverbindungen entsprechend einer allgemeinen Formel (C)

$$Z - D - N = N - K_2 - Z \qquad (C)$$

beschrieben, in welcher D dem Rest der aromatischen Diaminoverbindung $H_2N{-}D{-}NH_2$ , $K_2$ dem Rest einer acylierbaren aminogruppenhaltigen Kupplungskomponente $H{-}K{-}NH_2$ und Z dem in der Beschreibung genannten faserreaktiven Rest der allgemeinen Formel (2a) entspricht. Sie lassen sich in erfindungsgemäßer Weise, beispielsweise analog dem obigen Ausführungsbeispiel 43, aus den aus der Formel ersichtlichen Komponenten und Cyanurchlorid herstellen. Sie besitzen sehr gute faserreaktive Farbstoffeigenschaften und liefern auf den in der Beschreibung genannten Materialien, wie insbesondere Cellulosefasermaterialien, nach den in der Technik üblichen Anwendungsmethoden, vorzugsweise nach den für faserreaktive Farbstoffe üblichen Applikations- und Fixiermethoden, farbstarke Färbungen und Drucke mit guten Echtheiten, in dem in dem jeweiligen Tabellenbeispiel angegebenen Farbton auf Baumwolle.

Azoverbindung entsprechend Formel (C)

| Bsp. | Aminodiphenylamin entsprechend Formel (8) | Rest -D- entspr. Diamin $H_2N-D-NH_2$ | Kupplungskomponente $H-K_2-NH_2$ | Farbton |
|---|---|---|---|---|
| 44 | 1-Nitro-2-(4'-aminophenyl-amino)-5-(ß-sulfatoethyl-sulfonyl)-benzol | 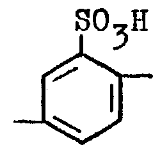 | 1-Amino-8-naphthol-3,6-disulfonsäure | rot |
| 45 | dito | 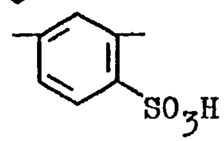 | 3-Amino-8-naphthol-6-sulfonsäure | orange |
| 46 | dito | dito | 1-Amino-8-naphthol-4,6-disulfonsäure | rot |
| 47 | dito | 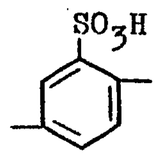 | dito | rot |

## Patentansprüche

1. Eine wasserlösliche Azoverbindung entsprechend der allgemeinen Formel (1)

$$Z - D - N = N \leftarrow E - N = N \rightarrow_k K - R'' \qquad (1)$$

in welcher bedeuten:
Z ist ein Rest der allgemeinen Formel (2)

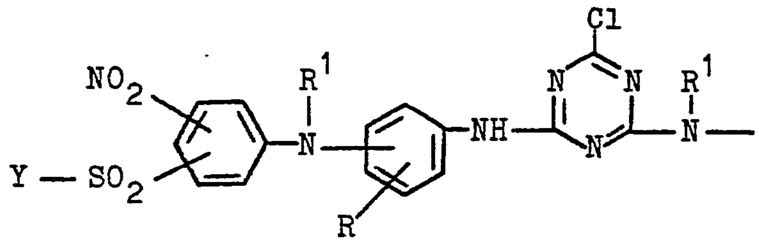

(2)

in welcher
$R^1$ für ein Wasserstoffatom oder eine gegebenenfalls substituierte Alkylgruppe von 1 bis 4 C-Atomen steht, wobei beide $R^1$ zueinander gleiche oder voneinander verschiedene Bedeutungen besitzen können,
R ein Wasserstoffatom oder eine Sulfogruppe bedeutet und
Y ist die Vinylgruppe oder eine β-Thiosulfatoethyl-, β-Phosphatoethyl-, β-Chlorethyl- oder eine β-Sulfatoethyl-Gruppe;
k ist die Zahl Null oder 1;
D ist eine Gruppe der allgemeinen Formel (3)

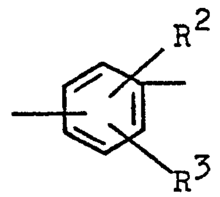

(3)

in welcher
$R^2$ ein Wasserstoffatom, eine Alkylgruppe von 1 bis 4 C-Atomen, eine Alkoxygruppe von 1 bis 4 C-Atomen, ein Chloratom oder eine Sulfogruppe bedeutet und $R^3$ ein Wasserstoffatom oder eine Sulfogruppe ist, wobei $R^2$ und $R^3$ zueinander gleich oder voneinander verschieden sein können;
E ist der Rest einer kupplungsfähigen und diazotierbaren Verbindung, die beim Aufbau der Verbindungen (1) zunächst als Kupplungskomponente, dann als Diazokomponente dient, und
einen Phenylenrest, bevorzugt, 1,4-Phenylenrest, darstellt, der durch einen oder zwei Substituenten substituiert sein kann, die aus der Menge von 2 Alkyl von 1 bis 4 C-Atomen, 2 Alkoxy von 1 bis 4 C-Atomen, 1 Chlor, 1 Brom, 1 Alkanoylamino von 2 bis 5 C-Atomen, das substituiert sein kann, 1 Benzoylamino, 1 Sulfo, 1 Carboxy, 1 Ureido, 1 Phenylureido und 1 Alkylsulfonylamino von 1 bis 4 C-Atomen ausgewählt sind,
oder einen Naphthylenrest, bedeutet, der durch 1 oder 2 Sulfogruppen oder die angegebene Gruppe $-SO_2-Y$ oder durch 1 Sulfogruppe und die angegebene Gruppe $-SO_2-Y$ substituiert sein kann, wobei Y die obengenannte Bedeutung hat und beide Y zueinander gleiche oder voneinander verschiedene Bedeutungen haben,
R" ist ein Wasserstoffatom oder ein Chlortriazinylamino-Rest der obengenannten und definierten allgemeinen Formel (2);
K ist im Falle, daß R" einen Rest der allgemeinen Formel (2) bedeutet, ein 1-Hydroxy-naphthylen-Rest, der in 2-Stellung die Azogruppe gebunden enthält, oder ist ein 2-Hydroxy-naphthylen-Rest, der in 1-Stellung die Azogruppe gebunden enthält, die beide bevorzugt durch 1 oder 2 Sulfogruppen substituiert sind oder ist ein 1,4-Naphthylenrest, der durch 1 oder 2 Sulfogruppen substituiert sein kann, oder ist ein Phenylenrest, wie der 1,4-Phenylenrest, der durch 1 oder 2 Substituenten substituiert sein kann, die aus der Gruppe von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das substituiert sein kann, 1 Benzoylamino, 1 Sulfo, 1 Carboxy, 1 Ureido, 1 Phenylureido und 1 Alkylsulfonylamino von 1 bis 4 C-Atomen ausgewählt sind, oder
K–R" mit R" einem Wasserstoffatom ist der 1-Hydroxy-naphthyl-Rest, der in 2-Stellung die Azogruppe gebunden enthält, oder der 2-Hydroxy-naphthyl-Rest, der in 1-Stellung die Azogruppe gebunden enthält, die durch 1 oder 2 Sulfogruppen substituiert sein können, bevorzugt substituiert sind, oder die durch eine gegebenenfalls substituierte Alkanoylaminogruppe von 2 bis 5 C-Atomen oder eine gegebenenfalls substituierte Benzoylaminogruppe oder bevorzugt durch eine oder zwei Sulfogruppen und eine gegebenenfalls substituierte Alkanoylaminogruppe von 2 bis 5 C-Atomen oder eine gegebenenfalls substituierte Benzoylaminogruppe substituiert sein können, oder ist ein Phenylrest, der, bevorzugt in p-Stellung, durch eine mono- oder disubstituierte Aminogruppe substituiert ist, deren Substituenten aus der Gruppe der Substituenten Alkyl von 1 bis 4 C-Atomen, Hydroxyalkyl von 1 bis 4 C-Atomen, Carboxyalkyl von 2 bis 5 C-Atomen, Sulfoalkyl von 1 bis 4 C-Atomen, Sulfatoalkyl von 1 bis 4 C-Atomen, Cyanoalkyl von 2 bis 5 C-Atomen, Carbalkoxyalkyl mit Alkylresten von jeweils 1 bis 4 C-Atomen, Phenylalkyl mit einem Alkylrest von 1 bis 4 C-Atomen, wobei dessen Phenylrest durch Methyl, Ethyl, Methoxy, Ethoxy, Chlor, Carboxy und/oder Sulfo substituiert sein kann, Phenyl und durch Alkyl von 1 bis 4 C-Atomen, Alkoxy von 1 bis 4 C-Atomen, Chlor, Carboxy und/oder Sulfo substituiertes Phenyl ausgewählt sind, und der zusätzlich durch 1 oder 2 Substituenten substituiert sein kann, die aus der Gruppe von 2 Alkyl von 1 bis 4 C-Atomen, 2 Alkoxy von 1 bis 4 C-Atomen, 2 Chlor, 1 Brom, 1 Alkanoylamino von 2 bis 5 C-Atomen, das substituiert sein kann, 1 Benzoylamino, 1 Sulfo, 1 Carboxy, 1 Ureido, 1 Phenylureido und 1 Alkylsulfonylamino von 1 bis 4 C-Atomen ausgewählt sind.

2. Verfahren zur Herstellung der in Anspruch 1 genannten und definierten Azoverbindungen der allgemeinen Formel (1), dadurch gekennzeichnet, daß man eine Verbindung der allgemeinen Formel (5a) oder (5b)

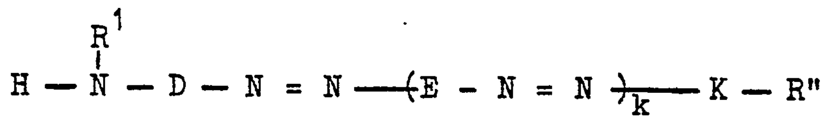 (5a)

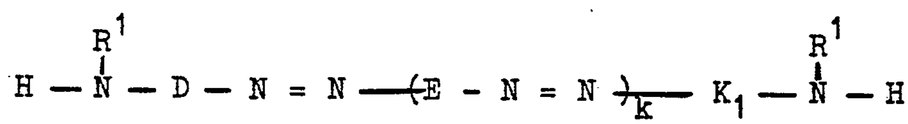 (5b)

(worin D, K, E, k und $R^1$ sowie R" der in Anspruch 1 genannten Bedeutungen haben und $K_1$ den für K genannten Rest bedeutet, falls R" für Z steht), mit einer Dichlortriazin-Verbindung der allgemeinen Formel (6)

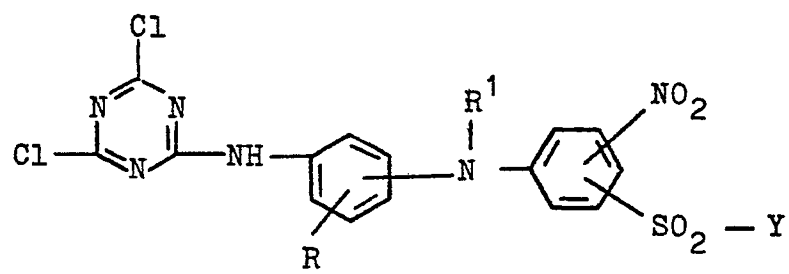 (6)

in welcher $R^1$, R und Y die in Anspruch 1 genannten Bedeutungen haben, in einfach bzw. zweifach molarer Menge unter Abspaltung von ein bzw. zwei Mol Chlorwasserstoff umsetzt,
oder daß man eine Verbindung der allgemeinen Formel (7)

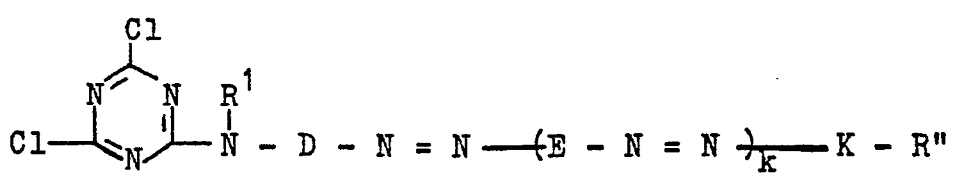 (7)

mit D, E, K, k, R" und $R^1$ der in Anspruch 1 genannten Bedeutung mit einer Aminodiphenylamin-Verbindung der allgemeinen Formel (8)

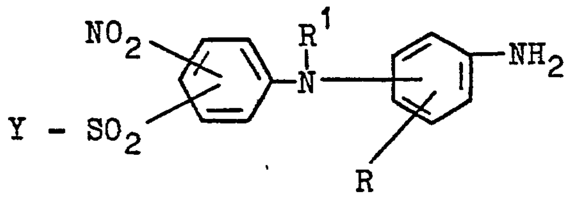

(8)

in welcher R¹, R und Y die in Anspruch 1 genannten Bedeutungen haben, unter Abspaltung eines Mols Chlorwasserstoff umsetzt,
oder daß man eine Diazoniumverbindung eines Amins der allgemeinen Formel (9)

$$Z - D -\!\!\!-(N = N - E)_k\!\!-\!\!- NH_2 \qquad (9)$$

in welcher Z, D, E und k die für Formel (1) angegebenen Bedeutungen haben, mit einer kupplungsfähigen Verbindung der allgemeinen Formel H–K–R" mit K und R" der obengenannten Bedeutung kuppelt.

3. Verwendung der in Anspruch 1 genannten und definierten Verbindungen der allgemeinen Formel (1) oder der nach Anspruch 2 hergestellten Verbindungen der allgemeinen Formel (1) als Farbstoffe.

4. Verwendung nach Anspruch 3 zum Färben (Colorieren) von hydroxy- und/oder carbonamidgruppenhaltigem Material, insbesondere Fasermaterial.

5. Verfahren zum Färben (Colorieren) von hydroxy- und/oder carbonamidgruppenhaltigem Material, vorzugsweise Fasermaterial, bei welchem man einen Farbstoff auf das Material aufbringt oder in das Material einbringt und ihn mittels Wärme und/oder in Gegenwart eines säurebindenden Mittels fixiert, dadurch gekennzeichnet, daß man als Farbstoff eine Verbindung der in Anspruch 1 genannten und definierten allgemeinen Formel (1) oder eine gemäß nach Anspruch 2 hergestellt Verbindung der allgemeinen Formel (1) einsetzt.

## Claims

1. A water-soluble azo compound which conforms to the general folmula (1)

$$Z - D - N = N -(E - N = N)_k - K - R'' \qquad (1)$$

in which
Z is a radical of the general formula (2)

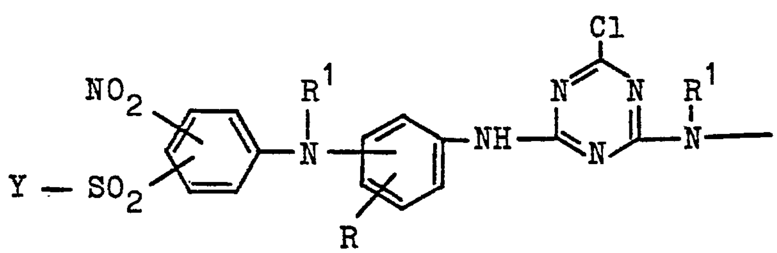

(2)

in which
$R^1$ stands for a hydrogen atom or an optionally substituted alkyl group of 1 to 4 carbon atoms, it being possible for the two $R^1$ to be identical to or different from each other,
R denotes a hydrogen atom or a sulfo group and
Y is the vinyl group or a β-thiosulfatoethyl, β-phosphatoethyl, β-chloroethyl or a β-sulfatoethyl group;
k is the number zero or 1;
D is a group of the general formula (3)

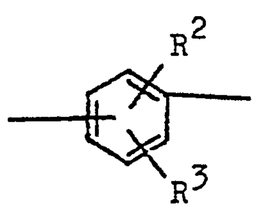

(3)

in which
$R^2$ denotes a hydrogen atom, an alkyl group of 1 to 4 carbon atoms, an alkoxy group of 1 to 4 carbon atoms, a chlorine atom or a sulfo group and
$R^3$ is a hydrogen atom or a sulfo group, it being possible for $R^2$ and $R^3$ to be identical to or different from each other;
E is the radical of a couplable and diazotizable compound which in the synthesis of compounds (1) serves first as a coupling component and then as a diazo component and
represents a phenylene radical, preferably 1,4-phenylene radical, which can be substituted by one or two substituents which are selected from the set consisting of 2 alkyl of 1 to 4 carbon atoms, 2 alkoxy of 1 to 4 carbon atoms, 1 chlorine, 1 bromine, 1 alkanoylamino of 2 to 5 carbon atoms which can be substituted, 1 benzoylamino, 1 sulfo, 1 carboxyl, 1 ureido, 1 phenylureido and 1 alkylsulfonylamino of 1 to 4 carbon atoms,
or denotes a naphthylene radical which can be substituted by 1 or 2 sulfo groups or the $-SO_2-Y$ group shown or by 1 sulfo group and the $-SO_2-Y$ group shown, Y having the abovementioned meaning and the two Y being identical to or different from each other,
R" is a hydrogen atom or a chlorotriazinylamino radical of the abovementioned and defined general formula (2);
K is in the case where R" denotes a radical of the general formula (2), a 1-hydroxynaphthylene radical which contains the azo group bonded in the 2-position or is a 2-hydroxynaphthylene radical which contains the azo group bonded in the 1-position, and which are both preferably substituted by 1 or 2 sulfo groups, or is a 1,4-naphthylene radical which can be substituted by 1 or 2 sulfo groups, or
is a phenylene radical, such as the 1,4-phenylene radical which can be substituted by 1 or 2 substituents which are selected from the group consisting of 2 alkyl of 1 to 4 carbon atoms, 2 alkoxy of 1 to 4 carbon atoms, 2 chlorine, 1 bromine, 1 alkanoylamino of 2 to 5 carbon atoms, which can be substituted, 1 benzoylamino, 1 sulfo, 1 carboxyl, 1 ureido, 1 phenylureido and 1 alkylsulfonylamino of 1 to 4 carbon atoms, or
K–R" where R" is a hydrogen atom, is the 1-hydroxynaphthyl radical which contains the azo group bonded in the 2-position or is the 2-hydroxynaphthyl radical which contains the azo group bonded in the 1-position, which can both be, preferably are, substituted by 1 or 2 sulfo groups, or which can both be substituted by an optionally substituted alkanoylamino group of 2 to 5 carbon atoms or an optionally substituted benzoylamino group or preferably by one or two sulfo groups and an optionally substituted alkanoylamino group of 2 to 5 carbon atoms or an optionally substituted benzoylamino group, or
is a phenyl radical which is substituted, preferably in the p-position, by a monosubstituted or disubstituted amino group whose substituents are selected from the group of substituents consisting of alkyl of 1 to 4 carbon atoms, hydroxyalkyl of 1 to 4 carbon atoms, carboxyalkyl of 2 to 5 carbon atoms, sulfoalkyl of 1 to 4 carbon atoms, sulfatoalkyl of 1 to 4 carbon atoms, cyanoalkyl of 2 to 5 carbon atoms, carbalkoxyalkyl having alkyl radicals of 1 to 4 carbon atoms each, phenylalkyl having an alkyl radical of 1 to 4 carbon atoms, it being possible for its phenyl radical to be substituted by methyl, ethyl, methoxy, ethoxy, chlorine, carboxyl and/or sulfo, phenyl and phenyl which is substituted by alkyl of 1 to 4 carbon atoms, alkoxy of 1 to 4 carbon atoms, chlorine, carboxyl and/or sulfo, and which phenyl radical can additionally be substituted by 1 or 2 substituents which are selected from the group consisting of 2 alkyl of 1 to 4 carbon atoms, 2 alkoxy of 1 to 4 carbon atoms, 2 chlorine, 1 bromine, 1 alkanoylamino of 2 to 5 carbon atoms, which can be substituted, 1 benzoylamino, 1 sulfo, 1 carboxyl, 1 ureido, 1 phenylureido and 1 alkylsulfonylamino of 1 to 4 carbon atoms.

2. A process for preparing the azo compounds of the general formula (1) mentioned and defined in claim 1, which comprises reacting a compound of the general formula (5a) or (5b)

$$H-N(R^1)-D-N=N-(E-N=N)_k-K-R" \qquad (5a)$$

$$H-N(R^1)-D-N=N-(E-N=N)_k-K_1-N(R^1)-H \qquad (5b)$$

(in which D, K, E, k and $R^1$ as well as R" have the meanings mentioned in claim 1 and $K_1$ denotes the radical mentioned for K if R" stands for Z) with a dichlorotriazine compound of the general formula (6)

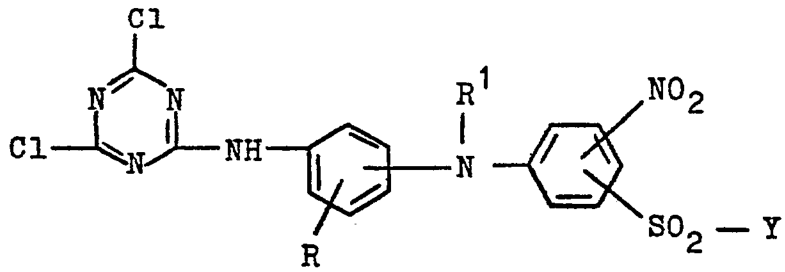

(6)

in which $R^1$, R and Y have the meanings mentioned in claim 1, in a single or twice the molar amount with elimination of one or two moles of hydrogen chloride,
or reacting a compound of the general folmula (7)

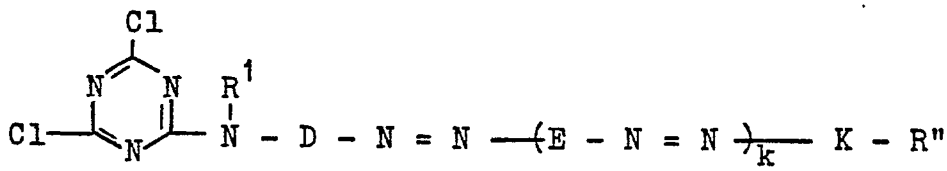

(7)

where D, E, K, k, R" and $R^1$ have the meanings mentioned in claim 1, with an aminodiphenylamine compound of the general formula (8)

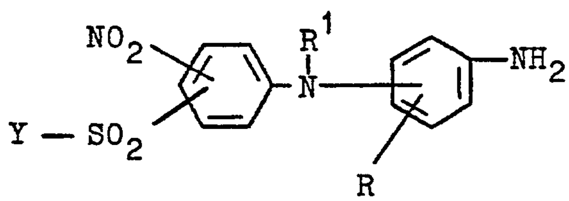

(8)

in which $R^1$, R and Y have the meanings mentioned in claim 1, with elimination of one mole of hydrogen chloride, or
coupling a diazonium compound of an amine of the general formula (9)

$$Z - D \leftarrow\!\!\!\!\!\!\!- ( N = N - E )_k \text{———} NH_2 \qquad (9)$$

in which Z, D, E and k have the meanings mentioned for the formula (1) with a couplable compound of the general formula H–K–R" where K and R" have the abovementioned meanings.

3. Use of the compounds of the general formula (1) mentioned and defined in claim 1 or of the compounds of the general formula (1) prepared as claimed in claim 2, as dyes.

4. Use as claimed in claim 3 for dyeing hydroxyl- and/or carboxamido-containing material, in particular fiber material.

5. A process for dyeing hydroxyl- and/or carboxamido-containing material, preferably fiber material, in which a dye is applied to or incorporated into the material and is fixed by means of heat and/or in the presence of an acid-binding agent, which comprises using as the dye a compound of the general formula (1) mentioned and defined in claim 1 or a compound of the general formula (1) prepared as claimed in claim 2.

**Revendications**

Composé azoïque soluble dans l'eau qui répond à la formule générale (1):

$$Z - D - N = N - ( E - N = N )_k - K - R'' \qquad (1)$$

dans laquelle:
Z représente un radical répondant à la formule générale (2):

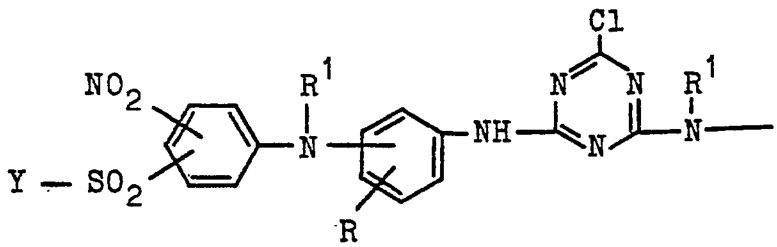

(2)

dans laquelle:

$R^1$ représente un atome d'hydrogène ou un radical alkyle contenant de 1 à 4 atomes de carbone et éventuellement substitué, les deux $R^1$ pouvant avoir, l'un par rapport à l'autre, la même signification ou des significations différentes,

R représente un atome d'hydrogène ou un radical sulfo et

Y représente un radical vinyle ou un radical thiosulfato-2 éthyle, phosphato-2 éthyle, chloro-2 éthyle ou sulfato-2 éthyle,

k représente un nombre égal à 0 ou à 1,

D représente un radical répondant à la formule générale (3):

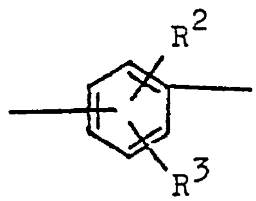

(3)

dans laquelle:

$R^2$ représente un atome d'hydrogène, un radical alkyle contenent de 1 à 4 atomes de carbone, un radical alcoxy contenant de 1 à 4 atomes de carbone, un atome de chlore ou un radical sulfo et

$R^3$ représente un atome d'hydrogène ou un radical sulfo,

les symboles $R^2$ et $R^3$ pouvant avoir, l'un par rapport à l'autre, la même signification ou des significations différentes,

E est le radical d'un composé copulable et diazotable qui, lors de la synthèse des composés (1), sert d'abord de composante de copulation, puis de composante de diazotation, et représente:

– un radical phénylène, de préférence phénylène-1,4, qui peut porter un ou deux substituants, en l'espèce 2 alkyles en $C_1$–$C_4$, 2 alcoxy en $C_1$–$C_4$, 1 chlore, 1 brome, 1 alcanoylamino en $C_2$–$C_5$ éventuellement substitué, 1 benzoylamino, 1 sulfo, 1 carboxy, 1 uréido, 1 phényluréido ou 1 alkylsulfonylamino en $C_1$–$C_4$, ou

– un radical naphtylène qui peut porter 1 ou 2 radicaux sulfo ou le radical $-SO_2-Y$ indiqué, ou 1 radical sulfo et le radical $-SO_2-Y$ indiqué, le symbole Y ayant la signification qui lui a été donnée plus haut et les deux Y ayant, l'un par rapport à l'autre, la même signification ou des significations différentes,

R" représente un atome d'hydrogène ou un radical chloro-triazinylamino répondant à la formule générale (2) qui est représentée et définie ci-dessus,

K, dans le cas où R" désigne un radical de formule générale (2), représente:

– un radical hydroxy-1 naphtylène lié par sa position 2 au radical azo, ou un radical hydroxy-2 naphtylène lié par sa postion 1 au radical azo, chacun de ces deux radicaux portant de préférence 1 ou 2 radicaux sulfo, ou

– un radical naphtylène-1,4 éventuellement porteur d'1 ou de 2 radicaux sulfo, ou

– un radical phénylène, par exemple phénylène-1,4, qui peut porter 1 ou 2 substituants, en l'espèce 2 alkyles en $C_1$–$C_4$, 2 alcoxy en $C_1$–$C_4$, 2 chlores, 1 brome, 1 alcanoylamino en $C_2$–$C_5$ éventuellement substitué, 1 benzoylamino, 1 sulfo, 1 carboxy, 1 uréido, 1 phényluréido ou 1 alkylsulfonylamino en $C_1$–$C_4$, ou

K–R", dans le cas où R" désigne un atome d'hydrogène, représente:

– un radical hydroxy-1 naphtyle lié par sa position 2 au radical azo, ou un radical hydroxy-2 naphtyle lié par sa position 1 au radical azo, chacun de ces deux radicaux naphtyles pouvant porter, de préférence portant, 1 ou 2 radicaux sulfo, ou pouvant porter un radical alcanoylamino en $C_2$–$C_5$ éventuellement substitué ou un radical benzoylamino éventuellement substitué, ou, mieux, 1 ou 2 radicaux sulfo et un radical alcanoylamino en $C_2$–$C_5$ éventuellement substitué ou un radical benzoylamino éventuellement substitué, ou

– un radical phényle qui porte, de préférence en sa position para, un radical amino monosubstitué ou disubstitué dont les substituants sont choisis dans l'ensemble constitué par:

les alkyles en $C_1$–$C_4$, les hydroxyalkyles en $C_1$–$C_4$, les carboxyalkyles en $C_2$–$C_5$, les sulfoalkyles en $C_1$–$C_4$, les sulfato-alkyles en $C_1$–$C_4$, les cyanoalkyles en $C_2$–$C_5$, les alcoxycarbonylalkyles dont les radicaux alkyles contiennent chacun de 1 à 4 atomes de carbone, les phénylalkyles dont l'alkyle contient de

1 à 4 atomes de carbone et dont le phényle peut porter un méthyle, un éthyle, un méthoxy, un éthoxy, un chlore, un carboxy et/ou un sulfo, le phényle et les phényles qui portent un alkyle en $C_1$–$C_4$, un alcoxy en $C_1$–$C_4$, un chlore, un carboxy et/ou un sulfo, et qui peut en outre porter 1 ou 2 substituants, en l'espèce 2 alkyles en $C_1$–$C_4$, 2 alcoxy en $C_1$–$C_4$, 2 chlores, 1 brome, 1 alcanoylamino en $C_2$–$C_5$ éventuellement substitué, 1 benzoylamino, 1 sulfo, 1 carboxy, 1 uréido, 1 phényluréido ou 1 alkylsulfonylamino en $C_1$–$C_4$.

2. Procédé pour préparer les composés azoïques répondant à la formule générale (1) qui a été représentée et définie à la revendication 1, procédé caractérisé:

– en ce qu'on fait réagir un composé répondant à l'une des formules générales (5a) et (5b):

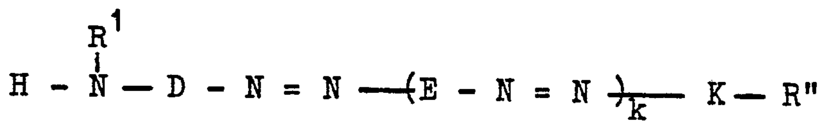
(5a)

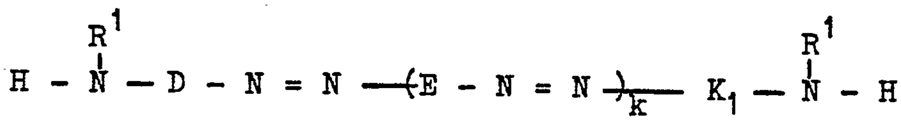
(5b)

(dans lesquelles D, K, E, k, $R^1$ et R" ont les significations qui leur ont été données à la revendication 1, et $K_1$ représente le radical cité pour K lorsque R" est un radical Z), avec une dichloro-triazine répondant à la formule générale (6):

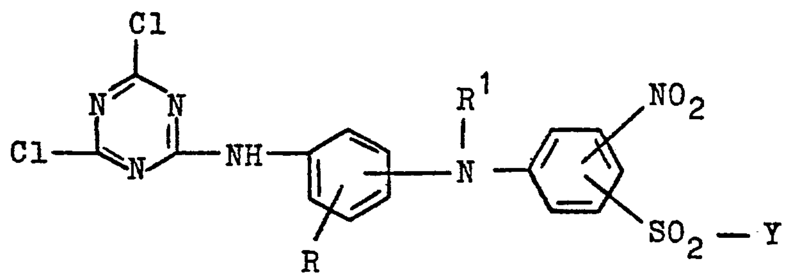
(6)

dans laquelle $R^1$, R et Y ont les significations qui leur ont été données à la revendication 1, en une quantité représentant une fois ou deux fois la quantité molaire, réaction qui se fait avec enlèvement d'une ou de deux mol de chlorure d'hydrogène,

– ou en ce qu'on fait réagir un composé répondant à la formule générale (7):

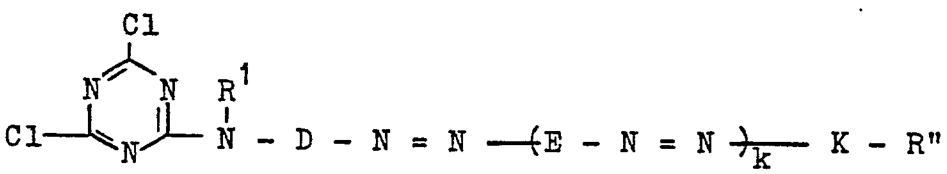
(7)

dans laquelle D, E, K, k, R" et $R^1$ ont les significations qui leur ont été données à la revendication 1, avec une amino-diphénylamine répondant à la formule générale (8):

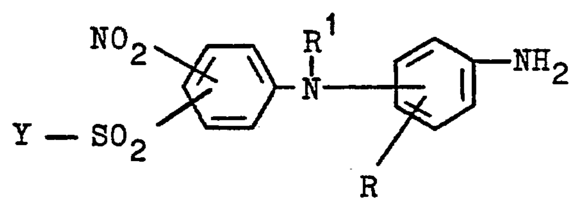
(8)

dans laquelle $R^1$, R et Y ont les significations qui leur ont été données à la revendication 1, réaction qui se fait avec enlèvement d'une mol de chlorure d'hydrogène,

– ou en ce qu'on copule un composé de diazonium d'une amine répondant à la formule générale (9):

$$Z - D - ( N = N - E )_k - NH_2 \qquad (9)$$

dans laquelle Z, D, E et k ont les significations qui leur ont été données à propos de la formule (1), avec un composé copulable répondant à la formule générale H–K–R" dans laquelle K et R" ont les significations qui leur ont été données ci-dessus.

3. Application des composés répondant à la formule générale (1) qui a été représentée et définie à la revendication 1, ou des composés de formule générale (1) qui ont été préparés selon la revendication 2, comme colorants.

4. Application selon la revendication 3 pour la teinture (coloration) de matières contenant des radicaux hydroxy et/ou des radicaux carbamoyles, plus particulièrement de matières fibreuses de ce genre.

5. Procédé pour teindre (colorer) des matières contenant des radicaux hydroxy et/ou des radicaux carbamoyles, de préférence des matières fibreuses de ce genre, selon lequel on applique un colorant sur la matière ou on introduit un colorant dans la matière, et on le fixe par la chaleur et/ou en présence d'un accepteur d'acides, ce procédé étant caractérisé en ce qu'on utilise, comme colorant, un composé répondant à la formule générale (1) qui a été représentée et définie à la revendication 1, ou un composé de formule générale (1) qui a été préparé selon la revendication 2.